# EUROPEAN PATENT APPLICATION

(11) **EP 3 217 339 A1**
(43) Date of publication of application: **13.09.2017**
(21) Application number: 17158817.1
(22) Date of filing: 02.03.2017
(51) Int. Cl.: G06Q 10/08

(54) **REPORT CREATING SYSTEM, REPORT CREATING DEVICE, REPORT CREATING SERVER, REPORT CREATING METHOD, AND NON-TRANSITORY COMPUTER READABLE STORAGE MEDIUM**

(30) Priority: 11.03.2016 JP 2016048723
(71) Applicant: Yokogawa Electric Corporation, Tokyo 180-8750 (JP)
(72) Inventor: Uomori, Yoshio, Tokyo, 180-8750 (JP); Gotou, Hirotsugu, Tokyo, 180-8750 (JP); Ishii, Yosuke, Tokyo, 180-8750 (JP); Oishi, Kenji, Tokyo, 180-8750 (JP)
(74) Representative: Henkel, Breuer & Partner

(57) **Abstract**

A report creating system includes a report creating server comprising a data storage which stores a report format and image information, the report format being for describing report contents about a facility installed in a plant, the image information being determined uniquely to meaning of the report contents, at least one report creating device which is carriable by a worker, and a report creator configured to create a report in which the image information has been registered in the report format, the report creator being disposed in the report creating server or the report creating device. The report creator is configured to display, on the report creating device, the report format and the image information, create the report in which the image information selected in accordance with an operation performed by the worker to the report creating device has been registered in the report format, and display, on the report creating device, the report format in which the selected image information has been registered.

## Description

### BACKGROUND

### Technical Fields

The disclosure relates to a report creating system, a report creating device, a report creating server, a report creating method, and a non-transitory computer readable storage medium.

Priority is claimed on Japanese Patent Application No. 2016-048723, filed March 11,2016, the contents of which are incorporated herein by reference.

### Related Art

In a plant which has various facilities, daily check works and works for coping with troubles, such as failure and fault, are performed to each facility installed at a specific place in the plant. A worker who performs the works, for example, carries a check book (for example, a paper medium, an electronic media, and so on), patrols in the plant, and performs works based on the check book at each facility. Check items performed at each facility and contents of the check works are shown in the check book. In the daily check works, the worker goes to each facility of check target in accordance with a check route assigned beforehand, and the worker checks for every check item based on a check list shown in the check book.

Thereafter, the worker creates a report in which a result of the check works performed to each facility is recorded, and the worker submits the report, for example, to a manager who stands by in an office and manages each facility installed in the plant. Thereby, the manager checks the contents written in the report submitted by the worker, and the manager understands a normality of each facility installed in the plant.

For example, a technology of a report creating system for a worker to write exact information in a report is disclosed in Japanese Unexamined Patent Application Publication No. 2003-271579. Japanese Unexamined Patent Application Publication No. 2003-271579 discloses that data is input into a standardized form of the report in order to register, into a database, the report in which exact information has been written. Thereby, with the technology disclosed in Japanese Unexamined Patent Application Publication No. 2003-271579, the manager can understand a normality of each facility installed in the plant based on the contents written in the standardized form of the report.

If an abnormality or a failure of a facility has been reported in the contents described in the report submitted by the worker, the manager determines whether or not it is necessary to cope with the abnormality or the failure which has been reported. If the manager determines that it is necessary to cope with the abnormality or the failure, the manager prepares for coping with the abnormality or the failure which has been reported, and the manager orders parts if needed. That is, the manager instructs for coping with each facility based on the contents described in the report submitted by the worker.

For example, Japanese Unexamined Patent Application Publication No. H9-288510 discloses a technology of a maintenance system which realizes paperless operation. In the technology disclosed in Japanese Unexamined Patent Application Publication No. H9-288510, the worker carries a portable terminal device and inputs data into the portable terminal device in order to create a database of history of maintenance work. By the technology disclosed in Japanese Unexamined Patent Application Publication No. H9-288510, the worker can perform maintenance work thereafter with reference to the history of the maintenance work in the database, and an omission of the maintenance work can be prevented.

By the way, various kinds of information other than numerical values obtained when the worker checks a facility, such as a phenomenon of an abnormality, a situation of a failure, and so on, which have been found while checking a facility, are described as contents in the report of the check work. The contents of the report are contents which have been described, by using writing tool, in the check book carried by the worker in a field. The contents are such as a place of a facility in which abnormality or failure has been found. If the check book is provided as an electronic media by the portable terminal device, the worker inputs the contents of the report by using an input device such as a keyboard with which the portable terminal device is equipped or a user interface such as a keyboard and an input button which are displayed on a display device with which the portable terminal device is equipped.

That is, the contents described in the report are texts which have been described by the worker in the field. In other words, the contents of the report are expressed based on characters. For this reason, in the description of the contents of the report, expression may be changed in accordance with workers. Therefore, it is considered that the manager cannot correctly understand the phenomenon of the abnormality and the situation of the failure based on the description of the contents of the report. In this case, it is necessary for the manager to obtain exact information required in order to determine whether or not it is necessary to cope with the abnormality or the failure, such as to ask the worker, who submitted the report, about the contents of the report. The work of asking the contents of the report is very complicated for the manager. Answering the asking about the ended check work is also complicated for the worker, and the worker answers the phenomenon of the abnormality and the situation of the failure which have been memorized by the worker. For this reason, it is also considered that the worker cannot answer correctly, and necessary information may be omitted. The technologies disclosed in Japanese Unexamined Patent Application Publication No. 2003-271579 and Japanese Unexamined Patent Application Publication No. H9-288510 also have the same problem if the contents of the report are described with texts.

### SUMMARY

A report creating system may include a report creating server comprising a data storage which stores a report format and image information, the report format being for describing report contents about a facility installed in a plant, the image information being determined uniquely to meaning of the report contents, at least one report creating device which is carriable by a worker, and a report creator configured to create a report in which the image information has been registered in the report format, the report creator being disposed in the report creating server or the report creating device. The report creator may be configured to display, on the report creating device, the report format and the image information, create the report in which the image information selected in accordance with an operation performed by the worker to the report creating device has been registered in the report format, and display, on the report creating device, the report format in which the selected image information has been registered.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating schematic configuration of a report creating system in the first embodiment.
FIG. 2A is a drawing illustrating an example of the check list which the report creating device 2 shows to the worker W in the report creating system 1 of the first embodiment.
FIG. 2B is a drawing illustrating an example of a report format which is shown to the worker W by the report creating device 2 in the report creating system 1 of the first embodiment.
FIG. 3 is a drawing illustrating an example of the report created by the report creating system 1 of the first embodiment.
FIG. 4 is a block diagram illustrating each component included in the report creating system 1 of the first embodiment.
FIG. 5 is a drawing illustrating an example of the image information described (registered) in the report in the report creating system 1 of the first embodiment.
FIG. 6 is a sequence diagram illustrating a flow (process sequence) of the process and the work at a time of performing the check work in the plant where the report creating system 1 of the first embodiment has been established.
FIG. 7 is a drawing illustrating an operation of inputting the result of the check work performed in the plant where the report creating system 1 of the first embodiment has been established.
FIG. 8 is a sequence diagram illustrating a flow (process sequence) of the process and the work at a time of creating a report in the plant where the report creating system 1 of the first embodiment has been established.
FIG. 9 is a drawing illustrating an operation of a first report creating method of creating the report in the plant where the report creating system 1 of the first embodiment has been established.
FIG. 10 is a drawing illustrating an operation of the second report creating method of creating the report in the plant where the report creating system 1 of the first embodiment has been established.
FIG. 11 is a drawing illustrating an operation of newly registering the image information at a time of creating the report in the plant where the report creating system 1 of the first embodiment has been established.
FIG. 12 is a drawing illustrating a state in which the newly registered image information is added in the plant where the report creating system 1 of the first embodiment has been established.
FIG. 13 is a block diagram illustrating each component included in a report creating system 10 of the second embodiment.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a report creating system, a report creating device, a report creating server, a report creating method, and a non-transitory computer readable storage medium which can create a report of which contents representing a state of each facility installed in the plant can be understood easily.

### <First Embodiment>

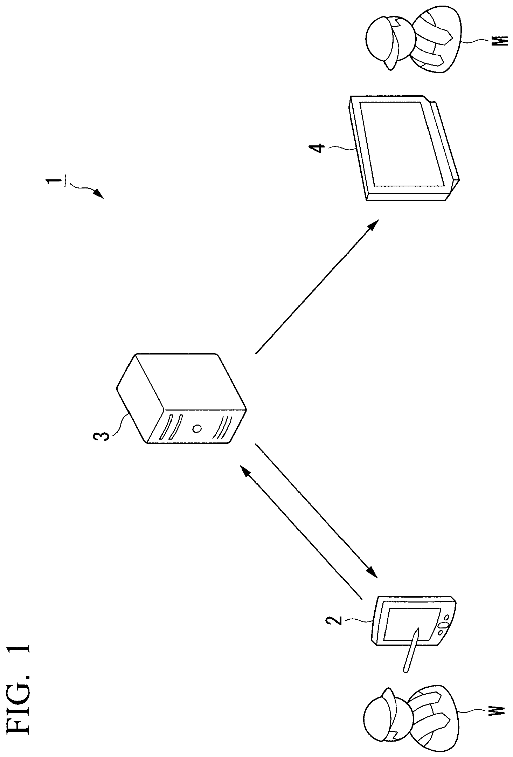

A first embodiment of the present invention will be described below, with reference to drawings. FIG. 1 is a block diagram illustrating schematic configuration of a report creating system in the first embodiment. The report creating system 1 is equipped with at least one report creating device 2 and a report creating server 3. The report creating system 1 is a supporting system which supports a work of creating a report, which is performed by a worker W who goes to each facility installed in the plant and performs various works such as a check work and a work of coping with trouble. The report creating system 1 is also a supporting system which supports a check work of the report submitted by the worker W, which is performed by the manager M who understands a normality of each facility installed in the plant. An example of configuration of the report creating system 1 which is equipped with a display terminal 4 is shown in FIG. 1, as a component for the manager M to check the report.

In a plant, the worker W carries the report creating device 2, patrols in the plant, and performs various works such as a check work and a work of coping with trouble in each facility. The plant includes an industrial plant refining petroleum and manufacturing chemical products, a plant managing and controlling a wellhead (for example, a gas field and an oil field), a plant managing and controlling a generation of electric power (for example, hydro power, thermal power, and nuclear power), a plant managing and controlling a power harvesting (for example, solar power and wind power), a plant managing and controlling water supply and sewerage systems, a dam, and so on.

Generally, two or more workers W belong to the plant. For this reason, each of the workers W carries the report creating device 2, moves in the plant, and performs various works in each facility. For this reason, the report creating system 1 is equipped with two or more report creating devices 2 carried by the workers W respectively. However, in order to describe simply below, as shown in FIG. 1, the report creating system 1 which is equipped with the single report creating device 2, the report creating server 3, and the display terminal 4 will be described as an example. An example of creating the report in the field when the worker W goes to a target (check target) which is to be checked by the worker W and checks the target will be described below.

The report creating device 2 is a portable terminal device carried by the worker W who performs various works in a facility installed in the plant. In the report creating system 1, the report creating device 2 and the report creating server 3 are connected to each other by a wireless communication network established in the plant.

The report creating device 2 may be a portable terminal device which is used exclusively in the plant, but not limited thereto. For example, the report creating device 2 may be a portable terminal device, such as a personal computer (PC) and a tablet terminal which has a function of a portable information terminal (PDA: Personal Digital Assistant). Furthermore, the report creating device 2 may be a portable communication terminal device, such as a smart phone in which a function of the mobile phone using an existing mobile communication network and a function of a portable information terminal.

It will be described below as an example that the report creating device 2 is equipped with a display which displays image and a user interface which receives an operation of the worker W, and the display and the user interface are integrated as a touch panel.

The report creating device 2 has a function for supporting the worker W, such as a function of showing contents of the check work which is to be performed by the worker W at each facility installed in the plant. Specifically, the report creating device 2 has a function of showing a check list to the worker W in accordance with an operation performed by the worker W when the worker W has arrived at the facility which is a check target. The contents of the check work which is to be performed to the facility are shown in the check list. By this function, the worker W can check easily the contents of the check work which is to be performed in each facility. Moreover, the worker W can input easily a result (hereinafter, called as "check result") of the check work performed based on the shown contents of the work by operating the report creating device 2. The contents of the work which is performed periodically (every day, every week, and so on) by the worker W are also included in the check work.

The report creating device 2 has a function of showing the report to the worker W in accordance with an operation by the worker W who has found a trouble, such as an unexpected abnormality and a failure of the facility. The report is a document for reporting a phenomenon of the abnormality and a situation of the failure which have been found by the worker W. Moreover, the report creating device 2 has a function of describing, in the report, the contents such as the phenomenon of the abnormality and the situation of the failure which have been found by the worker W. That is, the report creating device 2 has a function of supporting a creation of the report. By these functions, the worker W can correctly and easily describe, in the report, the phenomenon of the abnormality and the situation of the failure, which have been found by the worker W.

The check list is a report in which the check result is described. However, the check list will be described below as a "check list" in distinction from the report for reporting a trouble. Moreover, the report for reporting a trouble will be described below as a "report".

The report creating device 2 communicates with the report creating server 3 through the wireless communication network established in the plant. The report creating device 2 transmits data and information to the report creating server 3, and receives data and information from the report creating server 3. Specifically, the report creating device 2 transmits (outputs), to the report creating server 3, data and information of the report in which the check result by the worker W, the phenomenon of the abnormalities and the situation of failure which have been found by the worker W have been described.

For example, the report creating device 2 may have various functions for supporting the worker W, such as a function of showing a map in the plant, and a function of showing on the map a check route to a facility of check target. By these function, the worker W moves in accordance with the map and the check route which have been shown, and can easily go to the place where each facility of check target has been installed.

The report creating server 3 is a server device which stores and manages various kinds of data and information about the facility installed in the plant. The report creating server 3 communicates with the each report creating device 2 through the wireless communication network established in the plant. The report creating server 3 transmits data and information to the each report creating device 2, and receives data and information from the each report creating device 2.

Specifically, the report creating server 3 transmits (outputs) data of the stored check list to the report creating device 2 in accordance with a request from the report creating device 2. The report creating server 3 transmits (outputs), to the report creating device 2, data of a format of the stored report and data representing the contents of the report used when the worker W creates the report in accordance with a request from the report creating device 2. The report creating server 3 receives data and information, such as a result of the check work and the report, which have been transmitted from the report creating device 2, and the report creating server 3 stores and manages the data and the information which has been received from the report creating device 2. For example, as a result of the check work, the report creating server 3 stores "identification number (ID)" of the check work, "date and time" when the check work is performed, "title" of the check work, "category" of the check work, "location" where the check work is performed, "result" of the check work, "worker" who performs the check work, "detailed information" about the result of the check work, and so on are stored and managed.

For example, if the report creating device 2 has a function of showing the map and the check route in the plant, the report creating server 3 transmits (outputs), to the report creating device 2, map data and check route data in the plant, which have been stored, in accordance with a request from the report creating device 2.

The report creating server 3 may be a server device which holds data on the Internet and which is included in a cloud computing system.

The display terminal 4 is a display terminal device for the manager M to browse data and information which has been stored in the report creating server 3. For example, the display terminal 4 is equipped with a display device, such as a liquid crystal display (LCD). For example, similar to the report creating device 2, the display terminal 4 is realized by a personal computer (PC), a portable information terminal (tablet computer), a portable communication terminal device (smart phone), or the like. The display terminal 4 displays, on a display screen, data and information which have been output from the report creating server 3 in accordance with an operation by the manager M. Thereby, the display terminal 4 shows various kinds of data and information wanted by the manager M. The display terminal 4 may be a display device connected to the report creating server 3.

The manager M browses the report submitted by the worker W, and the manager M determines whether to cope with a trouble or not. The display terminal 4 may be a terminal device which prepares for coping with the trouble and orders parts if needed when the manager M has been determined that it is necessary to cope with the trouble. In this case, the manager M operates the display terminal 4 in order to ask a company to cope with the trouble, and to place an order for parts with a company which sells the parts, through the wireless communication network established in the plant or the Internet. The report creating server 3 may ask the company to cope with the trouble and may place the order for the parts with the company through the wireless communication network or the Internet, in accordance with an operation of the display terminal 4 by the manager M.

Thereby, the report creating system 1 supports the worker W who carries the report creating device 2 and checks each facility installed in the plant, while the report creating device 2 and the report creating server 3 communicates with each other through the wireless communication network established in the plant. In a case that the report creating server 3 is a server device included in the cloud computing system, the report creating system 1 may support the worker W who carries the report creating device 2 and patrols in the plant, while the report creating device 2 and the report creating server 3 communicate with each other through the Internet.

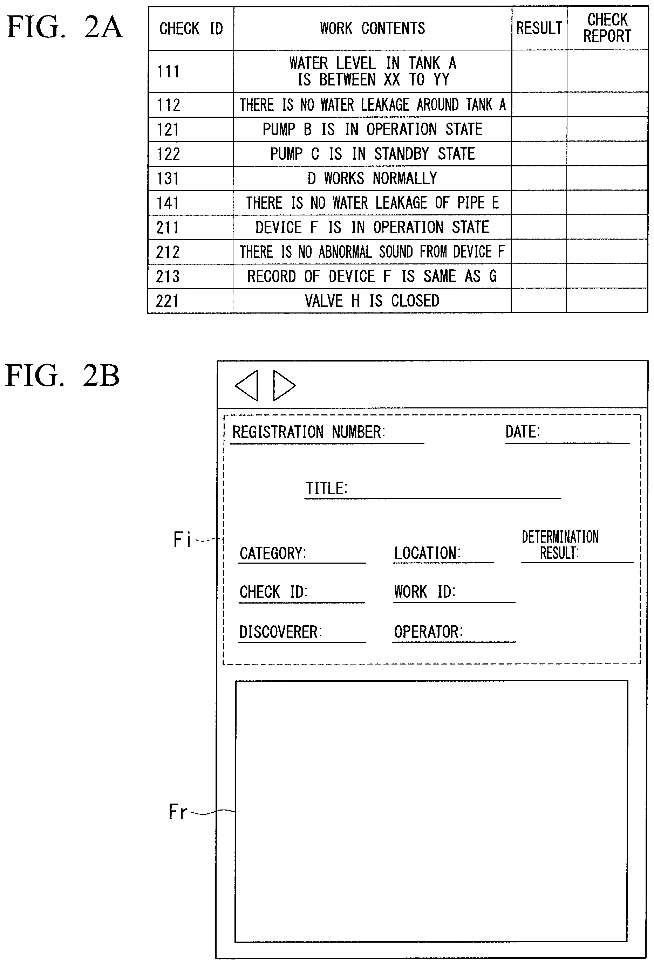

Next, an example of a format of the check list and the report which the report creating device 2 shows to the worker W in the report creating system 1 will be described. FIG. 2A is a drawing illustrating an example of the check list which the report creating device 2 shows to the worker W in the report creating system 1 of the first embodiment. FIG. 2B is a drawing illustrating an example of a report format which is shown to the worker W by the report creating device 2 in the report creating system 1 of the first embodiment.

When the worker W arrives at a facility of check target and operates the report creating device 2 to request the check list, the report creating device 2 communicates with the report creating server 3, obtains (receives) the check list shown in FIG. 2A from the report creating server 3, and displays the check list. In the check list, as shown in FIG. 2A, "work contents" of the check work which is to be performed by the worker W is described for every "check ID" which is used for identifying each check item. In the check list, as shown in FIG. 2A, the item of "result" in which the result of the check work performed by the worker W is input and the item of "check report" in which contents of the check work are reported are associated with each other for every check ID.

The worker W specifies the item of "result" associated with the performed check work, and the worker W inputs the result of the check work. When the worker W discovers a trouble such as an unexpected abnormality or an unexpected failure of a facility while the check work, the worker W specifies the item of "check report" associated with the check work of which trouble has been discovered, and creates a report for reporting a phenomenon of the abnormality and a situation of the failure which have been discovered. In addition to the above-described items, the check list may include the same items as the items included in the conventional check book.

When the worker W discovers a trouble and operates the report creating device 2 to create the report, the report creating device 2 communicates with the report creating server 3, and obtains (receives) a report format (hereinafter, simply called as "report") shown in FIG. 2B from the report creating server 3, and displays the report. As shown in FIG. 2B, the report includes an information display area Fi and a report contents input area Fr.

The information display area Fi is an area in which basic information in the report, such as predetermined items common to all the reports, is described. FIG. 2B shows an example of the report in which predetermined items, such as "registration number", "date", "title", "category", "location", "determination result", "check ID", "work ID", "discoverer", and "operator", are described.

The "registration number" is a number exclusively assigned in order to identify each report. The "date" is information of the date when the report was created. The "title" is information representing the contents described in the report. The "category" is information representing a kind of the contents described in the report. The "location" is information of location where a trouble was discovered. The "determination result" is a result of the performed check work. The "check ID" is a check ID in the check list (in other words, information for identifying each check item). The "work ID" is information for identifying work contents if two or more work contents are associated with the same check ID. Therefore, the "work ID" is information which is not described if two or more work contents are not associated with the same check ID. The "discoverer" is information for identifying the worker W who discovered the trouble, such as a name and identification information of the worker W who creates the report. The "operator" is information for identifying the worker W who copcs with the trouble. For example, the "operator" is information for identifying the worker W if the worker W who discovered the trouble copes with the trouble. On the other hand, if another worker W copes with the trouble later, the "operator" is information for identifying the other worker W. For this reason, the "operator" may not be described when the report is created. In the information display area Fi, in addition to the above-described items, the same items as the items of the conventional report may be described.

In an example of the report shown in FIG. 2B, all the items in the information display area Fi are blank (undescribed). However, for example, the items such as "registration number", "date", "determination result", "check ID", "work ID", and "discoverer" are items which can be described when the worker W operates the report creating device 2 to create the report when the worker discovers a trouble. Therefore, when the report creating device 2 communicates with the report creating server 3 to obtain the report, the report creating device 2 may transmit information about the items of "determination result", "check ID", "work ID", and "discoverer" to the report creating server 3, and the report creating server 3 may transmit, to the report creating device 2, the report in which information is described in the items of "registration number" and "date", in addition to the information of the items transmitted from the report creating device 2.

For example, the items of "title", "category", and "location" are information input into the report by the worker W. However, the information input into the items may be predicted by using "check ID", and "work ID". Specifically, a kind ("category") of a trouble which has occurred and a location ("location") where the trouble has occurred can be predicted beforehand in accordance with a kind of a facility which is to be checked. Therefore, information predicted beforehand may be selected from a pull down menu so that the items of "category" and "location" can be input. The information of the item of "title" may be input automatically in accordance with the information of the items of "category" and "location", which have been selected from the pull down menu, and information of the facility which can be determined by using "check ID" and "work ID".

The report contents input area Fr is an area in which information about a result of the check work performed by the worker W, such as report contents which cannot be represented in the information display area Fi, is described. In the report creating system 1, differing the conventional technology, the information of the report contents in the report contents input area Fr is not described with texts, but is described with image information (symbol), such as predetermined symbols (for example, circle, square, and triangle), specific forms (for example, icons), and predetermined colors (for example, blue, green, and red). The image information may be a word symbol, a graphic symbol, or a combination thereof. Meaning of the report contents is uniquely determined for every image information which is to be described in the report contents input area Fr, so that the worker W and the manager M can understand the report contents visually. In other words, in the report creating system 1, the image information is registered in the report contents input area Fr so that the information of the report contents can be visually represented.

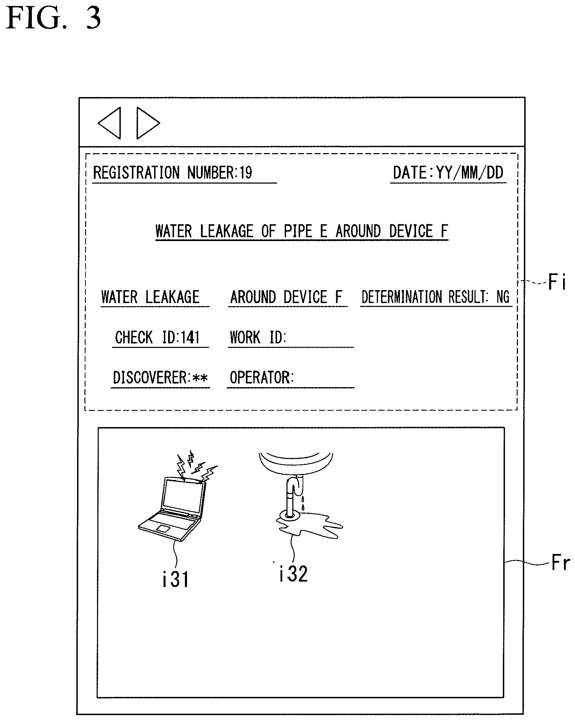

An example of the report in which information of discovered trouble has been described (registered) will be described. FIG. 3 is a drawing illustrating an example of the report created by the report creating system 1 of the first embodiment. FIG. 3 shows an example of the report created by the worker W by operating the report creating device 2. In the report shown in FIG 3, the category is "water leakage", the location is "around device F", the determination result is "NG = bad", the check ID is 141, and the registration number is 19. For this reason, it can be understand that when the worker W performed the check work of which check ID is 141 in the check list shown in FIG. 2A, the worker W found the "water leakage" of a pipe "around device F", and the determination result of the check work was "NG = bad". Since the input method of information into each item in the information display area Fi can be easily conceived based on the explanation described above and the conventional technology, detailed explanation will be omitted.

As described above, the image information in which meaning of the report contents is uniquely determined is described (registered) in the report contents input area Fr. The image information is an icon in which information of the report contents is visually represented (designed) by an intelligible shape. In an example of the report shown in FIG. 3, an abnormal sound icon i31 which represents that "abnormal sound" has occurred and a water leakage icon i32 which represents that "water leakage" has occurred are described (registered) in the report contents input area Fr.

As shown in FIG. 3, the worker W describes (registers) the information about the phenomenon and the situation of the discovered trouble in the report contents input area Fr by using the image information such as an icon in order to create the report, and the worker W submits the created report to the manager M. That is, the worker W transmits, to the report creating server 3, data of the report created by using the report creating device 2. The report creating server 3 receives and stores the data of the report transmitted from the report creating device 2.

Thereafter, the manager M browses the report stored in the report creating server 3 by using the display terminal 4. The manager M checks the icon described (registered) in the report contents input area Fr. Thereby, the manager M can check detailed contents about the information described in the information display area Fi. For example, in accordance with the example of the report shown in FIG. 3, the manager M can understand that "abnormal sound" has occurred in addition to "water leakage" of a pipe "around device F". Thereafter, the manager M determines whether to cope with the trouble or not based on the report submitted by the worker W. If the manager M determines that it is necessary to cope with the trouble, the manager M prepares for coping with the trouble and orders parts if needed.

The preparation for coping with the trouble performed by the manager M may be instructions for coping with the trouble with respect to the worker W who is in a field where the trouble has occurred. In this case, the worker W performs a work for coping with the discovered trouble in accordance with the instructions for coping with the trouble from the manager M. At this time, the worker W may additionally describe (register) image information, such as an icon representing information of performed work contents for coping with the trouble, in the report contents input area Fr of the report submitted to the manager M.

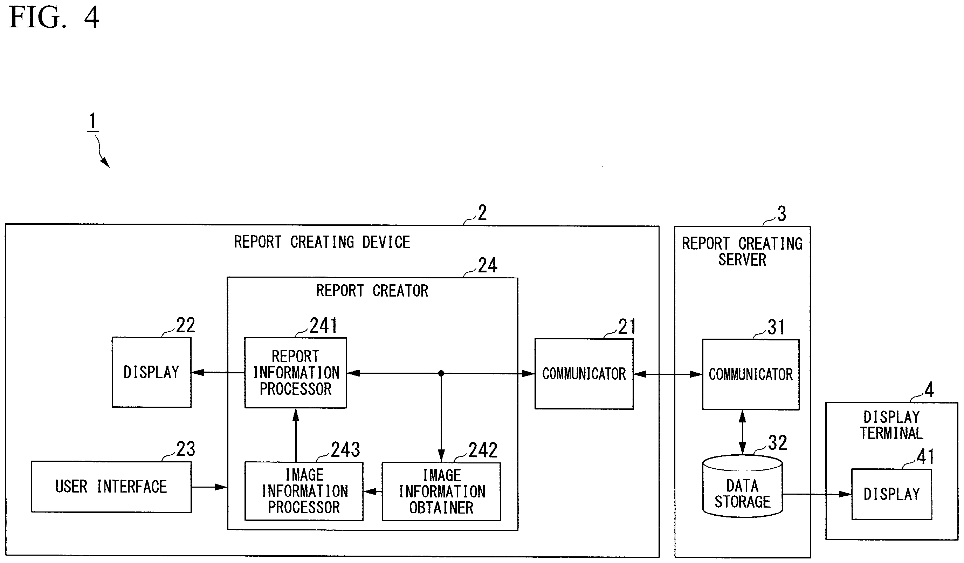

Next, each component included in the report creating system 1 will be described. FIG. 4 is a block diagram illustrating each component included in the report creating system 1 of the first embodiment. The report creating device 2 is equipped with a communicator 21, a display 22, a user interface 23, and a report creator 24. The report creating server 3 is equipped with a communicator 31 and a data storage 32. The display terminal 4 is equipped with a display 41.

First, each component included in the display terminal 4 will be described. The display 41 generates and displays a display screen in accordance with data and information stored in the data storage 32 in the report creating server 3 in order to show the manager M various kinds of information. As described above, for example, the display 41 includes a display device such as a liquid crystal display (LCD).

Next, each component included in the report creating device 2 will be described. For example, the communicator 21 communicates with the communicator 31 in the report creating server 3 through the wireless communication network established in the plant or the Internet, in accordance with instructions of communication which has been input by the worker W operating the user interface 23.

Specifically, the communicator 21 transmits a request of the check list to the communicator 31 in accordance with instructions for obtaining the check list, which have been input by the worker W operating the user interface 23 when the worker W arrives at a facility of check target to which the check work is to be performed. Thereafter, the communicator 21 receives data of the check list which has been transmitted from the communicator 31 in accordance with the request of the check list, and the communicator 21 outputs the data of the received check list to the report creator 24. The communicator 21 transmits a request of the report format to the communicator 31 in accordance with instructions for creating the report, which have been input by the worker W operating the user interface 23 when the worker W has discovered a trouble in the facility of check target. Thereafter, the communicator 21 receives data of the report format which has been transmitted from the communicator 31 in accordance with the request of the report format, and the communicator 21 outputs the data of the received report format to the report creator 24. The communicator 21 transmits a request of the image information to the communicator 31 in accordance with instructions for describing information in the report, which have been input by the worker W operating the user interface 23 when the worker W creates the report (for example, instructions for describing (registering) image information in the report). Thereafter, the communicator 21 receives data of the image information which has been transmitted from the communicator 31 in accordance with the request of the image information, and the communicator 21 outputs the data of the received image information to the report creator 24. Furthermore, the communicator 21 transmits a request for storing the data of the check list and the report to the communicator 31, and transmits the data of the check list and the report, which has been output from the report creator 24, to the communicator 31, in accordance with instructions for reporting (submitting) a result which has been input by the worker W operating the user interface 23 when the worker W reports the check result to the manager M.

The display 22 generates and displays a display screen in accordance with the data of the check list and the report which has been output from the report creator 24, in order to show various kinds of information to the worker W who carries the report creating device 2. The display 22 includes a display device, such as a liquid crystal display (LCD: Liquid Crystal Display).

The user interface 23 includes such as a button and a switch, and receives an operation performed from the worker W to the report creating device 2. In the report creating device 2, the user interface 23 is a pressing sensor provided in the display 22. The report creating device 2 is equipped with a touch panel including the pressing sensor and the display 22. Therefore, the user interface 23 detects various kinds of touch operation by the worker W, such as tap and flick, and receives the detected operation as an operation from the worker W to the report creating device 2. Thereafter, the user interface 23 outputs, to the report creator 24, the information representing the received operation of the worker W (information of various kinds of instructions from the worker W to the report creating device 2). The user interface 23 is not limited to the pressing sensor which is combined with the display 22 in the touch panel.

The report creator 24 outputs, to the display 22, the data of the check list and the report, which has been output from the communicator 21. The report creator 24 adds information of the check result to the data of the check list and the report in accordance with the instructions of the worker W output from the user interface 23. That is, the report creator 24 is a processor which performs various kinds of processing for updating the data of the check list and the report. In other words, the report creator 24 displays the check list and the report on the display 22 in order to show it to the worker W, and the report creator 24 writes (registers) the information of the check result, which has been input by the worker W, in the check list and the report. And the report creator 24 outputs the updated data of the check list and the report to the communicator 21. Thereby, the data of the check list and the report updated by the report creator 24 is transmitted to the report creating server 3 by the communicator 21. The report creator 24 includes a report information processor 241, an image information obtainer 242, and an image information processor 243.

The report information processor 241 outputs, to the display 22, the data of the check list and the report, which has been output from the communicator 21, and report information processor 241 performs a process (hereinafter, "information updating process") of adding, to the data of the check list and the report, the information output from the image information processor 243, and reflecting it. The report information processor 241 outputs to the communicator 21 the data of the check list and the report to which the information updating process has been performed, in order to transmit the data of the check list and the report to the report creating server 3. The report information processor 241 outputs to the display 22 the data of the check list and the report to which the information updating process has been performed. Thereby, the display 22 displays the updated check list and the updated report to show them to the worker W.

The image information obtainer 242 obtains the data of the image information output from the communicator 21, and outputs the obtained image information to the image information processor 243. For example, the image information obtainer 242 has an unillustrated temporary storage (hereinafter, "built-in memory") which stores (holds) the obtained image information temporarily, such as a DRAM (Dynamic Random Access Memory). The image information obtainer 242 may output to the image information processor 243 the image information stored in the unillustrated built-in memory in response to a request from the image information processor 243.

In accordance with instructions of the information updating process by the worker W, which have been output from the user interface 23, the image information processor 243 outputs to the report information processor 241 the corresponding image information output from the image information obtainer 242. At this time, the image information processor 243 also outputs to the report information processor 241 information representing a position where the image information specified by the instructions of the information updating process is to be described (registered). Thereby, the report information processor 241 performs the information updating process of adding the image information output from the image information processor 243 to the position specified by the worker W in the check list and the report, and reflecting it.

Next, each component included in the report creating server 3 will be described. The communicator 31 communicates with the communicator 21 included in the report creating device 2 through the wireless communication network established in the plant or the Internet.

Specifically, in accordance with a request of the check list transmitted from the communicator 21, the communicator 31 reads data of the requested check list out of the data storage 32, and the communicator 31 transmits to the communicator 21 the data of the read check list which has been read. In accordance with a request of the report format transmitted from the communicator 21, the communicator 31 reads data of the requested report format out of the data storage 32, and the communicator 31 transmits to the communicator 21 the data of the report format which has been read. In accordance with a request of the image information transmitted from the communicator 21, the communicator 31 reads data of the requested image information out the data storage 32, and the communicator 31 transmits to the communicator 21 the data of the image information which has been read. The communicator 31 receives a request for storing the data of the check list and the report transmitted from the communicator 21 and the data of the check list and the report transmitted from the communicator 21, and the communicator 31 stores in the data storage 32 the data of the check list and the report which has been received.

The data storage 32 is a storage which stores (memorizes) various kinds of data and information which is to be supplied by the report creating server 3, and various kinds of data and information transmitted from the report creating device 2. The data storage 32 stores the data of the check list, the data of the report format, and the data of the image information. The data storage 32 stores the data of the check list, the data of the report, and information, in which the information of the check result has been described (registered) by the report creating device 2 (registration). The data storage 32 may be various kinds of memories, such as a ROM (Read Only Memory), a Random Access Memory), a flash memory, and a storage device such as a HDD (Hard disk drive). The data which is stored in the data storage 32 is not limited to the above-described data and information, but includes various kinds of data and information used by the report creating system 1.

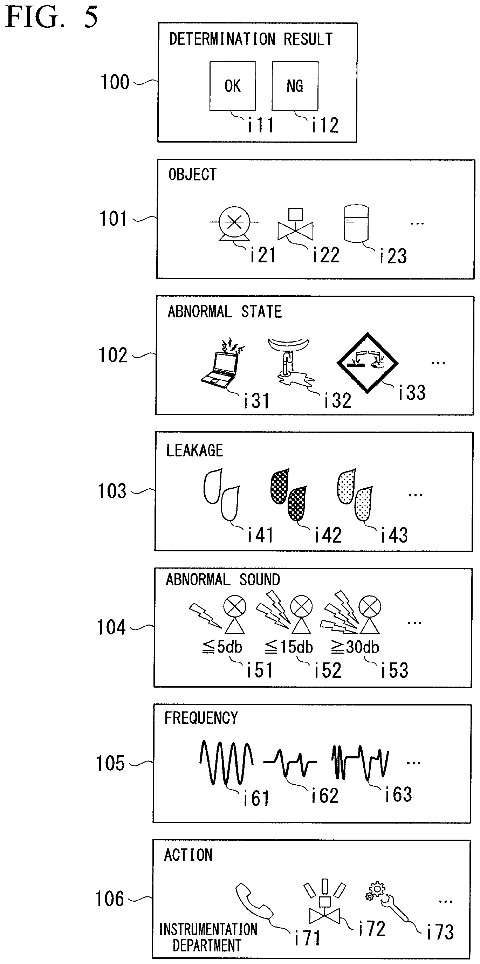

The data of the image information stored (memorized) in the data storage 32 will be described. FIG. 5 is a drawing illustrating an example of the image information described (registered) in the report in the report creating system 1 of the first embodiment. Specifically, FIG. 5 illustrates an example of icons stored (memorized) as the image information in the data storage 32.

The data storage 32 categorizes the icons for each type (category) of the report contents represented by the icon, and stores (memorizes) it. In a case of the example of the icons shown in FIG. 5, the data storage 32 categorizes the icons into each category of "determination result", "object", "abnormal state", "leakage", "abnormal sound", "frequency", and "action", and the data storage 32 stores (memorizes) the icons.

The "determination result" category 100 is a category to which each icon representing a result of the check work performed by the worker W belongs. In the example of the icon shown in FIG. 5, an OK icon i11 representing that the result of the check work is "OK" (= good) and an NG icon i12 representing that the result of the check work is "NG" (= no good) are categorized into the "determination result" category 100.

An "object" category 101 is a category to which each icon representing a facility (facility of check target) which is a target of the check work performed by the worker W or a facility (facility of report target) which needs to report the result of the check work belongs. Hereinafter, the facility of report target is also called as "facility of check target" without distinguishing from the facility of check target. In the example of the icons shown in FIG. 5, a pump icon i21 representing that the facility of check target is a "pump", a valve icon i22 representing that the facility of check target is a "valve", and a container icon i23 representing that the facility of check target is a "container", such as a tank, are categorized into the "object" category 101.

An "abnormal state" category 102 is a category to which each icon representing a trouble discovered by the worker W, such as an abnormality and a failure of a facility, belongs. In the example of the icons shown in FIG. 5, an abnormal sound icon i31 representing that "abnormal sound" has occurred, a water leakage icon i32 representing that "water leak" has occurred, and a corrosion icon i33 representing that "corrosion" has occurred are categorized into the "abnormal state" category 102.

A "leakage" category 103 is a category to which each icon representing a type of liquid which have leaked in the facility of check target belongs. In the example of the icons shown in FIG. 5, a water icon i41 representing that the liquid which has leaked is "water", a contaminated water icon i42 representing that the liquid which has leaked is "contaminated water", and an oil icon i43 representing that the liquid which has leaked is "oil" are categorized into the "leakage" category 103.

An "abnormal sound" category 104 is a category to which each icon representing a magnitude (volume) of an abnormal sound in the facility of check target belongs. In the example of the icons shown in FIG. 5, a small volume icon i51 representing that the magnitude of the abnormal sound is "less than or equal to 5 [db]", a medium volume icon i52 representing that the magnitude of the abnormal sound is "less than or equal to 15 [db]", and a large volume icon i53 representing that the magnitude of the abnormal sound is "more than or equal to 30 [db]" are categorized into the "abnormal sound" category 104.

A "frequency" category 105 is a category to which each icon representing a frequency of abnormality in the facility of check target belongs. In the example of the icons shown in FIG. 5, a continuation icon i61 representing that a cycle of abnormality is "continuous", a constant cycle icon i62 representing that the cycle of abnormality is a "constant cycle", and a discontinuation icon i63 representing that the cycle of abnormality is "discontinuous" are categorized into the "frequency" category 105.

An "action" category 106 is a category to which each icon representing a coping (action) or a work performed by the worker W to the discovered trouble, such as an abnormality and a failure of the facility, belongs. In the example of the icons shown in FIG. 5, an instrumentation department calling icon i71 representing that a report of the trouble has been "informed to an instrumentation department (by telephone)", an urgent valve action icon i72 representing that "urgent valve action" has been performed in order to cope with the trouble, and a tightening icon i73 representing that a position where the trouble has been discovered is tighten are categorized into the "action" category 106.

Detailed information about a facility represented by the image information and a trouble of the facility is stored (memorized) in association with each other in the data storage 32. For example, if the image information is an icon, information such as "category" to which the icon belongs, "name" of the icon, "identification information (ID)" of the icon, and "supplementary information" about the icon is associated with each icon.

The data of the image information stored (memorized) in the data storage 32 is not limited to the icon categorized into the category shown in FIG. 5. For example, data of the image information corresponding to each plant, in which the meaning of the report contents, such as each facility installed in the plant and an assumed trouble of the facility, has been determined uniquely is stored (memorized) in the data storage 32. An addition and a change can be performed to the data of the image information stored (memorized) in the data storage 32, for example, by the manager M, at any time.

By such configuration, the report creating system 1 supports the work of creating the report, which is performed by the worker W who performs the check work in each facility while carrying the report creating device 2 and moving one by one in the plan. That is, the report creating system 1 supports the worker W in order to easily create the report in which the discovered phenomenon of the abnormality and the discovered situation of the failure have been described (registered) correctly.

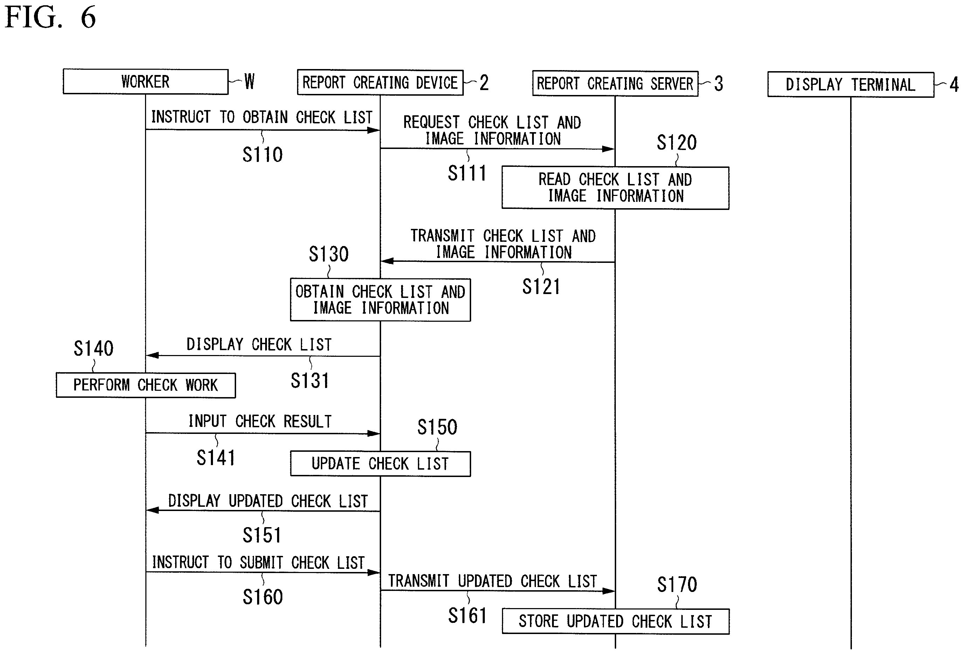

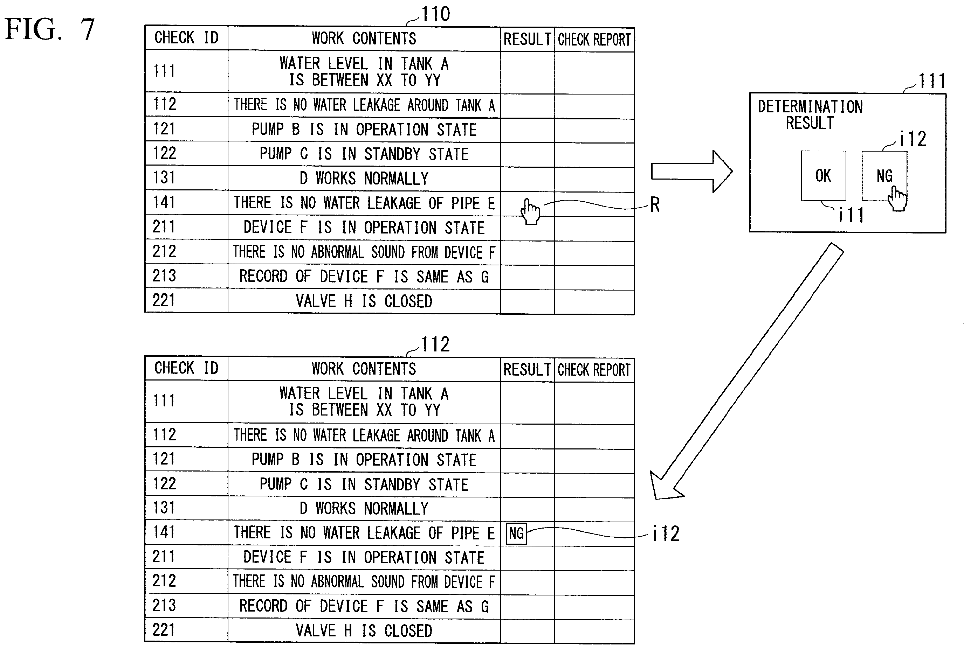

Next, operation of the report creating system 1 will be described. First, process and work at a time of performing the check work in the plant where the report creating system 1 has been established will be described. FIG. 6 is a sequence diagram illustrating a flow (process sequence) of the process and the work at a time of performing the check work in the plant where the report creating system 1 of the first embodiment has been established. FIG. 7 is a drawing illustrating an operation of inputting the result of the check work performed in the plant where the report creating system 1 of the first embodiment has been established. FIG. 6 shows an example of a flow of processes in each of the report creating device 2, the report creating server 3, and the display terminal 4 in the report creating system 1, which are to be operated when the worker W performs the check work based on the check list. FIG. 6 also shows the work of the worker W who performs the check work in the facility of check target (in other words, operations performed to the report creating device 2). FIG. 7 shows an example of operation performed to the report creating device 2 by the worker W at a time of describing (registering) the check result in the check list, and the check list displayed on the report creating device 2. Hereinafter, data of the check list, data of the report format, and data of the image information have been already stored in the data storage 32.

First, when the worker W arrives at the facility of check target, the worker W operates the report creating device 2 and instructs to obtain the check list (Step S110). The report creating device 2 transmits a request for transmitting the check list and the image information to the report creating server 3 in accordance with the instructions of obtaining the check list from the worker W in Step S110 (Step S111). Specifically, in Step S110, the worker W operates the user interface 23 in the report creating device 2, and instructs to obtain the check list. Thereafter, in Step S111, the communicator 21 in the report creating device 2 transmits, to the communicator 31 in the report creating server 3 through the wireless communication network, a request for transmitting each data of the instructed check list and the image information corresponding to the check list.

The report creating server 3 reads each data of the check list and the image information, which has been stored (memorized) in the data storage 32, in accordance with the request for transmitting the check list and the image information, which has been transmitted through the wireless communication network (Step S120). The report creating server 3 transmits to the report creating device 2 each data of the check list and the image information, which has been read (Step S121). Specifically, if the communicator 31 receives the request for transmitting each data of the check list and the image information, which has been transmitted from the communicator 21, in Step S120, the communicator 31 searches the data of the check list and the image information stored (memorized) in the data storage 32, and reads, out of the data storage 32, data corresponding to the check list and the image information, which has been requested. In Step S121, the communicator 31 transmits each data of the check list and the image information, which has been read, to the communicator 21 through the wireless communication network.

The communicator 31 may read the searched data of all the image information out of the data storage 32 and may transmit it to the communicator 21, but not limited thereto. For example, the communicator 31 may read, out of the data storage 32, only data of the image information corresponding to the check list among the searched data of all the image information, and may transmit the data read out of the data storage 32 to the communicator 21. Specifically, only the data of the OK icon i11 and the NG icon i12 which have been categorized into the "determination result" category and described (registered) in the check list may be read out of the data storage 32 and may be transmitted to the communicator 21, not all the data of the icons categorized into the category like the example of the icons shown in FIG. 5.

The report creating device 2 obtains each data of the check list and the image information, which has been transmitted through the wireless communication network (Step S130). The report creating device 2 displays the obtained check list, and shows it to the worker W (Step S131). Specifically, when the communicator 21 receives each data of the check list and the image information, which has been transmitted from the communicator 31, the communicator 21 outputs the received each data of the check list and the image information to the report creator 24 in Step S130. In the report creator 24, the report information processor 241 outputs to the display 22 the data of the check list output from the communicator 21 in Step S131. The display 22 generates a display screen in accordance with the data of the check list output from the report information processor 241, and the display 22 displays the generated display screen. In the report creator 24, the image information obtainer 242 stores the data of the image information output from the communicator 21 in the unillustrated built-in memory in Step S130.

For example, the processes of Step S110 to Step S131 may be performed in an office before the worker W starts to patrol in the plant in order to perform the check work. In this case, the worker W can go to the facility of check target while the check list is displayed on the report creating device 2.

Thereafter, the worker W performs the check work based on the check list displayed on the report creating device 2 (Step S140). The worker W operates the report creating device 2, and inputs the check result of the performed check work (Step S141). Thereby, the report creating device 2 updates the check list displayed on the display 22 (Step S150). The report creating device 2 displays the updated check list, and shows it to the worker W (Step S151).

Here, inputting the check result and a process (information updating process) of updating the check list by the worker W in Step S 141 to Step S 151 will be described with reference to FIG. 7. Specifically, a case in which the worker W inputs the check result of which check ID = 141 ("there is no water leakage of pipe E") when the check list shown in the display screen 110 is displayed on the display 22 of the report creating device 2 will be described.

First, in Step S141, the worker W selects (for example, taps) an item of "result" of which check ID = 141 (the position R in the check list shown in the display screen 110) after performing the check work of which check ID = 141. The user interface 23 in the report creating device 2 detects a touch operation to the item of "result" of which check ID = 141, and the user interface 23 receives a selection operation of the detected item of "result" of which check ID = 141. The user interface 23 outputs, to the report creator 24, information representing that the item of "result" of which check ID = 141 has been selected as instructions of the information updating process. In the report creator 24, based on the instructions of the information updating process output from the user interface 23, the image information processor 243 requests, to the image information obtainer 242, data of the image information corresponding to the item of "result" of which check ID = 141 selected by the worker W (here, each icon categorized into the "determination result" category). The image information obtainer 242 outputs, to the image information processor 243, data of the requested image information out of the data of the image information stored in the unillustrated built-in memory. The image information processor 243 outputs, to the report information processor 241, each of the data of the image information (icon) obtained from the image information obtainer 242 and the information representing that the item of "result" of which check ID = 141 is selected in the instructions of the information updating process. The report information processor 241 outputs to the display 22 the data of the image information (icon) output from the image information processor 243. Thereby, the display screen 111 is displayed on the display 22 in accordance with each data of the OK icon i11 and the NG icon i12 which have been categorized into the "determination result" category. The display screen 111 of the "determination result" category is a selection screen for selecting either one of the OK icon i11 or the NG icon i12.

Each icon categorized into the "determination result" category may be displayed on the display 22 instead of the check list which has been already displayed on the display 22. Each icon categorized into the "determination result" category which is to be displayed on the display 22 may be displayed as another screen (so-called, pop-up screen) in an area of a part of the check list which has been already displayed on the display 22 (for example, an area corresponding to the item of "result" of which check ID = 141 represented in the instructions of the information updating process).

Thereafter, when the icon of the "determination result" category shown in the display screen 111 is displayed on the display 22 of the report creating device 2, in Step S141, the worker W selects one of the icons (for example, taps the NG icon i12). The user interface 23 detects the touch operation to the NG icon i 12, and receives a selection operation of the NG icon i12. Moreover, the user interface 23 outputs, to the report creator 24, the information representing that the NG icon i12 has been selected as instructions of the information updating process.

In the report creator 24, in Step S150, the report information processor 241 performs the information updating process of adding the NG icon i12 to the item of "result" of which check ID = 141 in the check list based on the instructions of the information updating process output from the user interface 23. Thereby, the NG icon i12 is described (registered) in the item of "result" of which check ID = 141 in the check list. The report information processor 241 stores the check list to which the information updating process has been performed (in other words, data of the updated check list), for example, in the unillustrated built-in memory.

The report information processor 241 outputs the data of the updated check list to the display 22 in Step S151. The display 22 generates the display screen 112 in accordance with the data of the check list output from the report information processor 241, and the display 22 displays the display screen 112. The display screen 112 shows the updated check list in which the NG icon i 12 is displayed on the item of "result" of which check ID = 141 (the position R selected in Step S141).

Thereafter, the worker W instructs to submit the updated check list to the manager M (Step S160). The report creating device 2 transmits the updated check list to the report creating server 3 in accordance with the instruction of submitting the updated check list from the worker W in Step S160 (Step S161). Specifically, in Step S160, the worker W operates the user interface 23 in the report creating device 2 to instruct to submit the updated check list. Thereby, the communicator 21 in the report creating device 2 transmits the data of the updated check list to the communicator 31 in the report creating server 3 through the wireless communication network in Step S161.

The report creating server 3 stores (memorizes), in the data storage 32, the updated check list which has been transmitted through the wireless communication network (Step S170). Specifically, if the communicator 31 receives the updated check list which has been transmitted from the communicator 21, in Step S170, the communicator 31 replaces the data of the check list stored (memorized) in the data storage 32 with the data of the received check list in order to store (memorize) the check list. The report creating server 3 may store (memorize) the data of the received check list in the data storage 32 as data (in other words, other data) in which the check result corresponding to the check list stored (memorized) in the data storage 32 has been described (registered).

Thereafter, the manager M operates the display terminal 4 so that the manager M can browse the check list updated by the worker W, which has been stored (memorized) in the data storage 32 in the report creating server 3.

By the flow (process sequence) of the process and the work, the report creating system 1 can support the work of describing (registering) the check result in the check list, which is performed by the worker W who performs the check work in each facility while carrying the report creating device 2 and moving one by one in the plant.

Thereafter, the worker W creates the report in which the check item of which check result has been no good (NG) (in other words, report contents about a trouble discovered in the facility of check target, such as an unexpected abnormality and an unexpected failure of the facility) has been described (registered).

### <First report creating method>

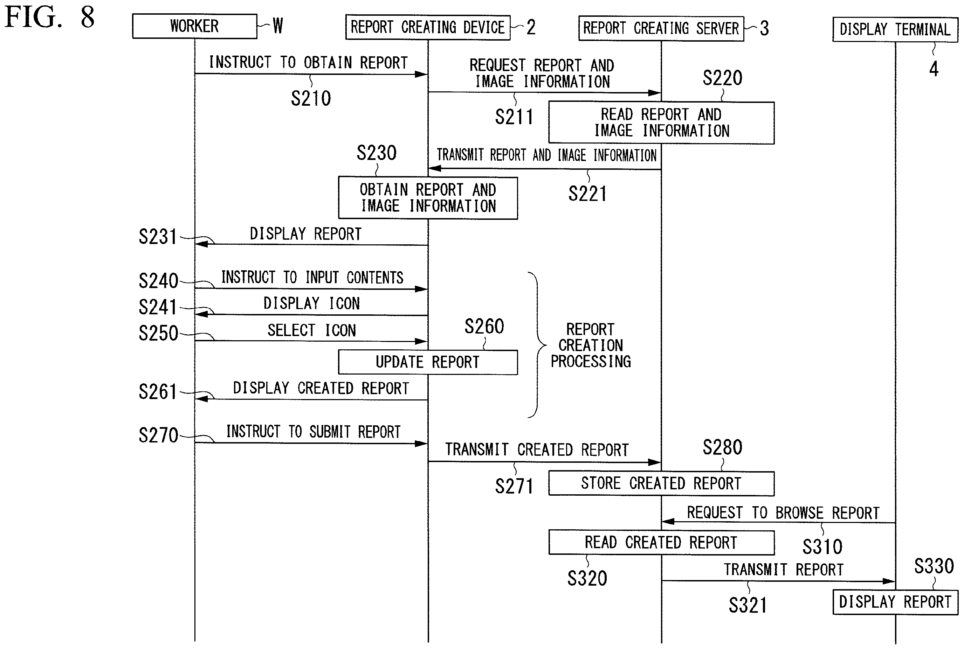

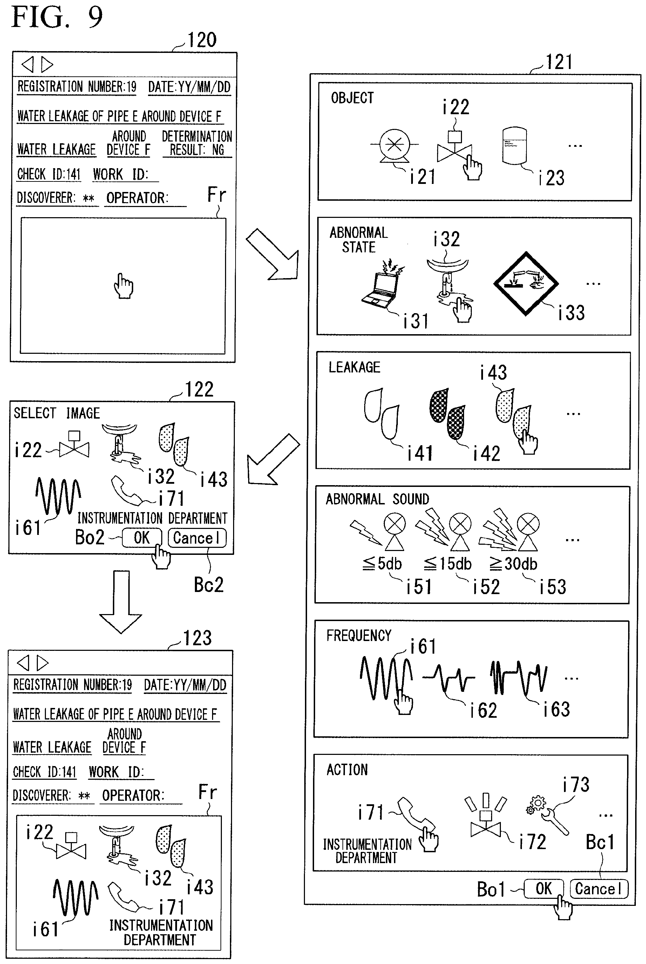

Next, an example of process and work of creating the report when the worker W discovers a trouble in the facility of check target, such as an unexpected abnormality and an unexpected failure of the facility, in the plant where the report creating system 1 has been established, will be described. FIG. 8 is a sequence diagram illustrating a flow (process sequence) of the process and the work at a time of creating a report in the plant where the report creating system 1 of the first embodiment has been established. FIG. 9 is a drawing illustrating an operation of a first report creating method of creating the report in the plant where the report creating system 1 of the first embodiment has been established. FIG. 8 shows an example of a flow of processes in each of the report creating device 2, the report creating server 3, and the display terminal 4 in the report creating system 1, which are to be operated when the worker W who has discovered the trouble creates the report. FIG. 8 also shows the work of the worker W who creates the report in the facility of check target (in other words, operations performed to the report creating device 2). FIG. 9 shows an example of operation performed by the worker W to the report creating device 2 and the report displayed on the report creating device 2 when the worker W describes (registers) the report contents about the discovered trouble in the report. Hereinafter, data of the check list, data of the report format, and data of the image information have been already stored in the data storage 32.

First, when the worker W describes (registers), in the report, the report contents about the trouble discovered in the facility of check target, the worker W operates the report creating device 2 to instruct to obtain the report (Step S210). The report creating device 2 transmits to the report creating server 3 a request for transmitting the report (in other words, report format) and the image information in accordance with the instructions of obtaining the report from the worker W in Step S210 (Step S211).

The instructions of obtaining the report from the worker W are performed, for example, by selecting (for example, tapping) a row of "check report" in a check item of which check result is no good (NG). For example, as shown in the display screen 112 of FIG. 7, if the check list in which the NG icon i 12 has been described (registered) in the item of "result" of which check ID = 141 is displayed on the report creating device 2, the worker W selects (for example, taps) the item of "check report" of which check ID = 141, in which the NG icon i12 has been described (registered) in Step S210. The user interface 23 in the report creating device 2 detects and receives the touch operation to the item of "check report" of which check ID = 141. Moreover, the user interface 23 outputs, to the communicator 21, information representing that the item of "check report" of which check ID = 141 has been selected. The communicator 21 transmits the request for transmitting each data of the report and the image information corresponding to the report to the communicator 31 in the report creating server 3 through the wireless communication network in Step S211.

The instructions of obtaining the report are not limited to the instructions performed by the worker W operating the report creating device 2. For example, when the check result representing that the result of check work is no good (NG) is described (registered) in the check list shown in the display screen 110 of FIG. 7, the instructions of obtaining the report may be performed automatically. Specifically, for example, in Step S141 shown in FIG. 6, when the worker W selects (for example, taps) the NG icon i12 representing that the result of the check work is no good (NG) (refer to the display screen 111 of FIG. 7), the communicator 21 may determine that the instructions of obtaining the report has been output based on information representing that the NG icon i12 output by the user interface 23 has been selected. The communicator 21 may transmit to the communicator 31 the request for transmitting each data of the report and the image information based on the determined instructions.

The report creating server 3 reads each data of the report and the image information, which has been stored (memorized) in the data storage 32, in accordance with the request for transmitting the report and the image information, which has been transmitted through the wireless communication network (Step S220). The report creating server 3 transmits to the report creating device 2 each data of the report and the image information, which has been read (Step S221). Specifically, when the communicator 31 receives the request for transmitting each data of the report and the image information, which has been transmitted from the communicator 21, in Step S220, the communicator 31 searches the data of the report format and the image information, which has been stored (memorized) in the data storage 32, and reads out of the data storage 32 the data corresponding to the report format and the image information which have been requested. The communicator 31 transmits each data of the report format and the image information, which has been read, to the communicator 21 through the wireless communication network in Step S221.

If the report creating server 3 has already transmitted data of all the image information to the report creating device 2 in accordance with the request for transmitting the check list and the image information, the communicator 31 may read only the data of the report format out of the data storage 32, and may transmit the data of the report format to the communicator 21. In other words, when the communicator 31 transmits the data of the image information in accordance with the request for transmitting the check list and the image information, if the communicator 31 has read out of the data storage 32 only the data of the icon categorized into the "determination result" category in the example of the icons shown in FIG. 5 and has transmitted it to the communicator 21, the communicator 31 reads out of the data storage 32 the data of each icon categorized into the other category, which has not transmitted, and transmits it to the communicator 21.

The report creating device 2 obtains each data of the report format and the image information, which has been transmitted through the wireless communication network (Step S230). The report creating device 2 displays the obtained report format to show it to the worker W (Step S231). Specifically, when the communicator 21 receives each data of the report format and the image information which has been transmitted from the communicator 31, the communicator 21 outputs each data of the report format and the image information, which has been received, to the report creator 24 in Step S230. In the report creator 24, the report information processor 241 outputs to the display 22 the data of the report format output from the communicator 21 in Step S231. The display 22 generates the display screen in accordance with the data of the report format output from the report information processor 241, and the display 22 displays the display screen. In the report creator 24, the image information obtainer 242 stores the data of the image information output from the communicator 21 in the unillustrated built-in memory in Step S230.

Thereafter, the worker W inputs the report contents into the report format displayed on the report creating device 2. At this time, the worker W operates the report creating device 2 to instruct to input the report contents (Step S240). The report creating device 2 starts a report creating process for performing a process of inputting the report contents in accordance with an operation of the worker W (in other words, a process of describing (registering) the image information in the report (information updating process)).

Here, inputting the report contents and a process of creating the report in the report creating process started from Step S240 in accordance with an operation of the worker W will be described with reference to FIG. 9. Specifically, as shown in the display screen 120, a case in which the worker W inputs the report contents when the report format corresponding to the check work of which check ID = 141 ("there is no water leakage of pipe E") is displayed on the display 22 of the report creating device 2 will be described.

First, the worker W selects (for example, taps) an arbitrary position in a report contents input area Fr in the display screen 120 of the report displayed on the display 22 of the report creating device 2 in Step S240. The user interface 23 in the report creating device 2 detects the touch operation to the report contents input area Fr, and the user interface 23 receives the selection operation of the detected report contents input area Fr. The user interface 23 outputs to the report creator 24 information representing that the report contents input area Fr has been selected, as instructions of the report creating process. In the report creator 24, the image information processor 243 requests, to the image information obtainer 242, the data of the image information corresponding to the report contents input area Fr selected by the worker W (here, each icon categorized into categories other than the "determination result" category in the example of the icons shown in FIG. 5) based on the instructions of the report creating process output from the user interface 23. The image information obtainer 242 outputs, to the image information processor 243, the data of the requested image information among the data of the image information stored in the unillustrated built-in memory. The image information processor 243 outputs, to the report information processor 241, each of the data of the image information (icon) obtained from the image information obtainer 242 and the information representing that the instructions of the report creating process have been performed.

In Step S241, the report information processor 241 outputs to the display 22 the data of the image information (icon) which has been output from the image information processor 243. Thereby, the display screen 121 in which each icon categorized into categories other than the "determination result" category is arranged in each category is displayed on the display 22. The display screen 121 is a selection screen for selecting one or more icons for every category. Hereinafter, if each icon categorized into categories other than the "determination result" category is shown without distinguishing, the each icon is called as "report contents icon".

Since many report contents icons are displayed on the display 22 in Step S241, it is also considered that these icons are not arranged within the size which can be displayed by the display 22. In this case, the report information processor 241 displays a part of the selection screen 121 of the report contents icons on the display 22. Moreover, the report information processor 241 moves the selection screen 121 of the report contents icons displayed on the display 22 in accordance with a flick operation or a scroll operation performed by the worker W to the selection screen 121.

Thereafter, when the selection screen 121 of the report contents icons is displayed on the display 22 of the report creating device 2, the worker W selects (for example, taps) each report contents icon categorized into each category representing the report contents in Step S250. In the example shown in the display screen 121, a valve icon i22 categorized into the "object" category, a water leakage icon i32 categorized into the "abnormal state" category, an oil icon i43 categorized into the category "leakage", a continuation icon i61 categorized into the "frequency" category, and an instrumentation department calling icon i71 categorized into the "action" category are selected by the worker W.

Whenever the user interface 23 detects the touch operation to the report contents icon, the user interface 23 receives a selection operation of the report contents icon, and outputs, to the report creator 24, information representing that the report contents icon has been selected as the instructions of the report creating process. In the report creator 24, for example, the image information processor 243 stores the information representing the report contents icon, which has been output from the user interface 23, in an unillustrated built-in memory.

When the worker W selects the report contents icon in Step S250, and checks the report contents of which meaning has been uniquely determined to each report contents icon (in other words, contents of the trouble represented by each report contents icon), for example, the worker W performs operation of tapping the report contents icon consecutive two times (so-called, double-tap operation) or pressing the report contents icon long time. In this case, the user interface 23 outputs, to the report creator 24, information representing the report contents icon to which the double-tap operation or the long pressing operation has been performed. The report information processor 241 displays, on the display 22, detailed information associated with the data of the report content icon output from the user interface 23. Thereby, the worker W can check the contents of the trouble uniquely determined to the report contents icon to which the double-tap operation or the long pressing operation has been performed.

After the worker W selects all the report contents icons representing the report contents, the worker W selects (for example, taps) the OK button Bo1 to decide the selection of each report contents icon. The user interface 23 detects the touch operation to the OK button Bo1, and receives the selection operation of the OK button Bo1. Moreover, the user interface 23 outputs, to the report creator 24, information representing that the OK button Bo1 has been selected as the instructions of the report creating process.

In the report creator 24, for example, the image information processor 243 outputs, to the report information processor 241, information representing the selected report contents icon stored in the unillustrated built-in memory in accordance with the information representing that the OK button Bo1 has been selected, which has been output from the user interface 23. The report information processor 241 outputs, to the display 22, data for check including the selected report contents icon based on the information representing the selected report contents icon, which has been output from the image information processor 243. The display 22 displays the data for check obtained from the report information processor 241. Thereby, the display screen 122 of "select image" in which only the selected report contents icon is included is displayed on the display 22. The display screen 122 is an example of a check screen of "select image" for checking whether or not the valve icon i22, the water leakage icon i32, the oil icon i43, the continuation icon i61, and the instrumentation department calling icon i71, which have been selected by the worker W in the selection screen 121 of the report contents icon, are decided as selected report contents icons.

Here, the check screen 122 of "select image" may be displayed on the display 22 instead of the selection screen 121 of the report contents icon which has been already displayed on the display 22. The check screen 122 of "select image" may be displayed on the display 22 as a pop-up screen on the selection screen 121 of the report contents icon which has been already displayed on the display 22.

After the worker W checks the check screen 122 of "select image", the worker W selects (for example, taps) the OK button Bo2 to finally decide the selection of each report contents icon. When the user interface 23 receives the selection of the OK button Bo2, the user interface 23 outputs, to the report creator 24, information representing that the OK button Bo2 has been selected as final instructions of the report creating process.

A cancel button Bc1 shown in the display screen 121 is a button for instructing that the selection of the report contents icon is canceled. If the worker W selects (for example, taps) the cancel button Bc1, the user interface 23 receives the selection operation of the cancel button Bc1, and outputs to the report creator 24 information representing that the cancel button Bc1 has been selected as instructions of the report creating process. In this case, the report information processor 241 displays the display screen 120 of the report format on the display 22. The cancel button Bc2 shown in the display screen 122 is a button for instructing that the final selection of each report contents icon is canceled. If the worker W selects (for example, taps) the cancel button Bc2, the user interface 23 receives the selection operation of the cancel button Bc2, and outputs to the report creator 24 information representing that the cancel button Bc2 has been selected as final instructions of the report creating process. In this case, the report information processor 241 displays the display screen 120 of the report format or the selection screen 121 of the report contents icon on the display 22.

In the selection screen 121 of the report contents icon or the check screen 122 of "select image", the method of deciding each operation by the worker W is not limited to the OK button shown in the selection screen 121 and the check screen 122. For example, if an area where the report contents icons are not displayed is selected (for example, tapped) in the selection screen 121 of the report contents icon or the check screen 122 of "select image", each operation may be decided. In this case, if the area where the report contents icons are not displayed is selected (for example, tapped) without selecting any one of the report contents icons in the selection screen 121 of the report contents icon, it represents that the selection of the report contents icon is canceled.

Thereafter, in the report creator 24, in Step S260, the report information processor 241 performs the information updating process of adding the selected report contents icon in the report contents input area Fr based on the final instructions of the report creating process output from the user interface 23. Thereby, the report contents icon selected by the worker W is described (registered) in the report contents input area Fr in the report. For example, the report information processor 241 stores, in the unillustrated built-in memory, the report to which the information updating process has been performed (in other words, data of the updated (created) report).

The report information processor 241 outputs the data of the updated (created) report to the display 22 in Step S261. The display 22 displays the data of the report output from the report information processor 241 in order to show the report to the worker W. Thereby, the display 22 generates the display screen 123 in accordance with the data of the report output from the report information processor 241, and displays the display screen 123. The display screen 123 shows the updated (created) report in which the selected report contents icon has been displayed in the report contents input area Fr in the report (in other words, a report in which the report contents about the trouble discovered by the worker W has been described (registered)). Specifically, the display screen 123 shows the report in which the valve icon i22, the water leakage icon i32, the oil icon i43, the continuation icon i61, and the instrumentation department calling icon i71, which have been decided in the check screen 122 of "select image", have been described (registered) in the report contents input area Fr.

By the flow (process sequence) of the process and the work, the image information is described (registered) in the report. That is, the process and the work described above are the report creating process.

Thereafter, the worker W instructs to submit the created report to the manager M (Step S270). The report creating device 2 transmits the created report to the report creating server 3 in accordance with the instructions of submitting the created report from the worker W in Step S270 (Step S271). Specifically, in Step S270, the worker W operates the user interface 23 in the report creating device 2 in order to instruct to submit the created report. Thereby, the communicator 21 in the report creating device 2 transmits the data of the created report to the communicator 31 in the report creating server 3 through the wireless communication network in Step S271.

The report creating server 3 stores (memorizes), in the data storage 32, the created report which has been transmitted through the wireless communication network (Step S280). Specifically, when the communicator 31 receives the created report which has been transmitted from the communicator 21, the communicator 31 stores (memorizes), in the data storage 32, the data of the created report which has been received from the communicator 21 in Step S280. The report creating server 3 may replace the data of the report stored (memorized) in the data storage 32 with the data of the received report, in order to store (memorize) the data of the received report.

The report creating server 3 may use the information of each report contents icon described (registered) in the report contents input area Fr of the created report as information for arranging the report contents icons. For example, the report creating server 3 may calculate a use frequency of each report contents icon in the report (in other words, number of times in which each report contents icon is selected by the worker W in order to describe (register) it in the report), and the report creating server 3 may sort each report contents icon in a descending order of the use frequency. Moreover, the report creating server 3 may sort each report contents icon in a descending order of an importance or a priority of each report contents icon, or an occurrence frequency of the trouble which occurs in the facility of check target. Thereby, the report creating server 3 can transmit, to the report creating device 2, the report contents icons sorted in the descending order of the use frequency, the importance, the priority, or the occurrence frequency, as the image information. For this reason, in the selection screen 121 of the report contents icon, the report contents icons displayed in each category are sorted in the descending order of the use frequency, the importance, the priority, or the occurrence frequency, and the report contents icons are displayed on the display 22 of the report creating device 2. Thereby, the worker W can select the report contents icon from the selection screen 121 of the report contents icon more easily.

By the flow (process sequence) of the process and the work, the report creating system 1 can support the work of creating the report in which the report contents about the trouble discovered by the worker W, who performs the check work in each facility while carrying the report creating device 2 and moving one by one in the plan, is described (registered).

Thereafter, the manager M operates the display terminal 4 in order to browse the report which has been stored (memorized) in the data storage 32 in the report creating server 3 and created by the worker W. Specifically, the display terminal 4 requests a browse of the report created by the worker W in accordance with the operation by the manager M (Step S310). The report creating server 3 reads the data of the report which has been created by the worker W and stored (memorized) in the data storage 32 in accordance with the request of browsing the report created by the worker W from the manager M in Step S310 (Step S320). The report creating server 3 transmits the data of the read report to the display terminal 4 (Step S321). Thereby, the display terminal 4 displays the report transmitted from the report creating server 3 on the display 41 in order to show the report to the manager M (Step S330).

The report creating process in the report creating device 2 is not limited to the flow (process sequence) of the process and the work described in FIG 8 and FIG. 9. For example, the report creating process in the report creating device 2 may be a flow of various processes and works for describing (registering) the selected report contents icon in the report contents input area Fr in accordance with the operation of the worker W. <Second report creating method>

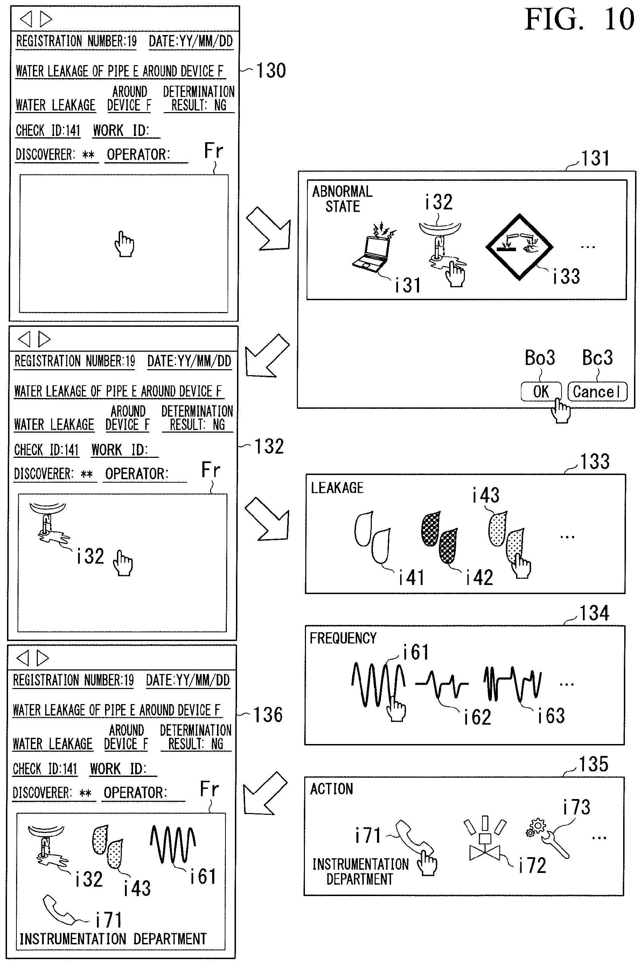

Next, another example of process and work of creating the report when the worker W discovers a trouble in the facility of check target, such as an unexpected abnormality and an unexpected failure of the facility, in the plant where the report creating system 1 has been established, will be described. FIG. 10 is a drawing illustrating an operation of the second report creating method of creating the report in the plant where the report creating system 1 of the first embodiment has been established. FIG. 10 shows an example of an operation performed by the worker W to the report creating device 2 and the report displayed on the report creating device 2 when the worker W describes (registers) the report contents about the discovered trouble in the report.

In the second report creating method, a flow (process sequence) of the process and the work in each of the report creating device 2, the report creating server 3, and the display terminal 4 in the report creating system 1, which are to be operated when the worker W who has discovered the trouble creates the report, is the same as the flow (process sequence) of the process and the work at the time of creating the report shown in FIG. 8. Therefore, a detailed explanation about process and work (process sequence) at a time of creating the report by the second report creating method will be omitted. Report creating processes (Step S240 to Step S261 shown in FIG. 8), in which the report creating device 2 inputs the report contents (describes (registers) the image information in the report) in accordance with the operation of the worker W, will be described below, with reference to FIG. 8 and FIG 10. Specifically, as shown in FIG. 10, a case in which the worker W inputs the report contents when the report format corresponding to the check work of which check ID = 141 ("there is no water leakage of pipe E") is displayed on the display 22 of the report creating device 2 will be described.

First, in Step S240, similar to the operation in the first report creating method shown in the display screen 120 of FIG. 9, the worker W selects (for example, taps) an arbitrary position in the report contents input area Fr in the report shown in the display screen 130 of FIG. 10 displayed on the display 22 of the report creating device 2. Similar to the operation in the first report creating method, the user interface 23 in the report creating device 2 receives the operation of detecting the touch operation to the report contents input area Fr and selecting the report contents input area Fr. Moreover, the user interface 23 outputs, to the report creator 24, information representing that the report contents input area Fr has been selected as instructions of the report creating process. In the report creator 24, similar to the operation in the first report creating method, the image information processor 243 requests, to the image information obtainer 242, data of the image information (in other words, the report contents icon) corresponding to the report contents input area Fr selected by the worker W based on the instructions of the report creating process output from the user interface 23. Similar to the operation in the first report creating method, the image information obtainer 242 outputs, to the image information processor 243, the requested report contents icon among the data of the image information stored in the unillustrated built-in memory. Similar to the operation in the first report creating method, the image information processor 243 outputs, to the report information processor 241, each of the data of the report contents icon obtained from the image information obtainer 242 and the information representing that the instructions of the report creating process have been performed.

In the second report creating method, in Step S241, the report information processor 241 outputs, to the display 22, each report contents icon categorized into one category, among the data of the report contents icons output from the image information processor 243. Thereby, the display screen 131 of each report contents icon categorized into one category other than the "determination result" category is displayed on the display 22. The display screen 131 of each report contents icon is a selection screen for selecting one or more report contents icons. In the selection screen 131, the abnormal sound icon i31 category, the water leakage icon i32, and the corrosion icon i33, which are categorized into the "abnormal state", are displayed.

The selection screen 131 of the report contents icon categorized into one category displayed on the display 22 may be displayed instead of the display screen 130 of the report format which has been already displayed on the display 22. The selection screen 131 of the report contents icon categorized into one category may be displayed on the display 22 as a pop-up screen on the display screen 130 of the report format which has been already displayed on the display 22.

It is also considered that many report contents icons categorized into one category are to be displayed on the display 22 in Step S241, and the selection screen 131 in which all the report contents icons have been shown cannot be displayed on the display 22 (in other words, the selection screen 131 cannot be within the size which can be displayed on the display 22). In this case, similar to the operation in the first report creating method, the report information processor 241 displays, on the display 22, a part of the selection screen 131 of the report contents icon categorized into one category. Moreover, the report information processor 241 moves the selection screen 131 of the report contents icon categorized into one category displayed on the display 22 in accordance with a flick operation or a scroll operation of the selection screen 131 by the worker W.

Thereafter, when the selection screen 131 of the report contents icon categorized into one category is displayed on the display 22 of the report creating device 2, the worker W selects (for example, taps) the report contents icon representing the report contents in Step S250. The water leakage icon i32 which is selected by the worker W and categorized into the "abnormal state" category is shown in the display screen 131. The user interface 23 detects the touch operation to the report contents icon (here, the water leakage icon i32), and receives a selection operation of the report contents icon. Moreover, the user interface 23 outputs, to the report creator 24, information representing the selected report contents icon as instructions of the report creating process. In the report creator 24, for example, the image information processor 243 stores, in the unillustrated built-in memory, the information representing the report contents icon (here, the water leakage icon i32) output from the user interface 23.

After the worker W selects all the report contents icons representing the report contents categorized into one category displayed on the display 22, the worker W selects (for example, taps) the OK button Bo3. Thereby, the selection of each report contents icon is decided. The user interface 23 detects the touch operation to the OK button Bo3, and receives the selection operation of the OK button Bo3. Moreover, the user interface 23 outputs, to the report creator 24, information representing that the OK button Bo3 has been selected as instructions of the report creating process.

Thereafter, in the report creator 24, in Step S260, the report information processor 241 performs the information updating process of adding the selected report contents icon (here, the water leakage icon i32) in the report contents input area Fr based on the instructions of the report creating process which has been output from the user interface 23. Thereby, the report contents icon selected by the worker W is described (registered) in the report contents input area Fr in the report. For example, the report information processor 241 stores, in the unillustrated built-in memory, the report (in other words, data of the updated (created) report) to which the information updating process has been performed.

The report information processor 241 outputs the data of the updated (created) report to the display 22 in Step S261. The display 22 displays the report output from the report information processor 241 in order to show the report to the worker W. Thereby, the display 22 generates the display screen 132 in accordance with the data of the report output from the report information processor 241, and displays the display screen 132. The display screen 132 shows the updated (created) report displayed on the display 22 in which the report contents icon selected in one category is displayed in the report contents input area Fr in the report (in other words, the report in which a part of the report contents about the trouble discovered by the worker W has been described (registered)). Specifically, the display screen 132 shows the report in which the water leakage icon i32 selected in the selection screen 131 of the report contents icon categorized into the "abnormal state" category is described (registered) in the report contents input area Fr, as a part of the report contents.

A cancel button Bc3 shown in the display screen 131 is a button for instructing that the selection of the report contents icon categorized into one category displayed on the display 22 is canceled. If the worker W selects (for example, taps) the cancel button Bc3, the user interface 23 receives the selection operation of the cancel button Bc3. Moreover, the user interface 23 outputs, to the report creator 24, information representing that the cancel button Bc3 has been selected as instructions of the report creating process. In this case, the report information processor 241 displays the display screen 130 of the report format on the display 22.

In the selection screen 131 of the report contents icon categorized into one category, the method of deciding the selection of the report contents icon by the worker W is not limited to the OK button Bo3 shown in the selection screen 131. For example, if an area where the report contents icons are not displayed is selected (for example, tapped) in the selection screen 131 of the report contents icon categorized into one category, the selection of the report contents icon may be decided. In this case, if the area where the report contents icons are not displayed is selected (for example, tapped) without selecting any one of the report contents icons in the selection screen 131 of the report contents icon categorized into one category, it represents that the selection of the report contents icon categorized into one category displayed on the display 22 is canceled.

The process and the work described above (in other words, the process and the work of one cycle in Step S240 to Step S261 shown in FIG. 8) is a report creating process of one cycle of inputting the report contents icon categorized into one category (describing (registering) the image information in the report) as a part of the report contents in accordance with the operation of the worker W.

After that, in the second report creating method, the report creating process of one cycle is repeated in accordance with a number of categories to which the data of the report contents icons output from the image information processor 243 has been categorized. Specifically, the report creating device 2 displays the selection screen of each report contents icon categorized into another category on the display 22 one by one in Step S241, in accordance with the selection (for example, tap) of an arbitrary position in the report contents input area Fr in the report, which has been performed by the worker W in the step S240. For example, the report creating device 2 stores information representing the selected report contents icon sequentially in the unillustrated built-in memory, in accordance with the selection (for example, tap) of the report contents icon in Step S250, which has been performed by the worker W. In Step S260, the report creating device 2 updates to the report contents uniquely determined to the report contents icon of which data has been selected in the report contents input area Fr (information updating process), and for example, the report creating device 2 stores the updated (created) data of the report sequentially in the unillustrated built-in memory. In Step S261, the report creating device 2 displays the updated (created) data of the report on the display 22 sequentially (in other words, shows the created report to the worker W sequentially).

After the selection screen 131 of the report contents icon categorized into the "abnormal state" category is displayed on the display 22 in Step S241 of first time, the selection screen 133 of the report contents icons (the water icon i41, the contaminated water icon i42, and the oil icon i43) categorized into the "leakage" category is displayed on the display 22 in Step S241 of second time. As shown in the selection screen 133, the oil icon i43 is selected by the worker W in Step S250. After the selection screen 133 of the report contents icons categorized into the "leakage" category is displayed on the display 22 in Step S241 of second time, the selection screen 134 of the report contents icons (the continuation icon i61, the constant cycle icon i62, and the discontinuation icon i63) categorized into the "frequency" category is displayed on the display 22 in Step S241 of third time. As shown in the selection screen 134, the continuation icon i61 is selected by the worker W in Step S250. After the selection screen 134 of the report contents icons categorized into the "frequency" category is displayed on the display 22 in Step S241 of third time, the selection screen 135 of the report contents icons (the instrumentation department calling icon i71, the urgent valve action icon i72, and the tightening icon i73) categorized into the "action" category is displayed on the display 22 in Step S241 of fourth time. As shown in the selection screen 135, the instrumentation department calling icon i71 is selected by the worker W in Step S250.

The display screen 136 shows the updated (created) report in which the report contents icons selected in each of report creating processes of the first time to the fourth time are displayed in the report contents input area Fr in the report (in other words, a report in which the report contents about the trouble discovered by the worker W has been described (registered) completely). Specifically, the display screen 136 shows the report in which the water leakage icon i32, the oil icon i43, the continuation icon i61, and the instrumentation department calling icon i71, which have been selected in the selection screens 131 and 133 to 135 of the report contents icons categorized into each category, are described (registered) in the report contents input area Fr as final report contents.

In the second report creating method, the report creating process is repeated in accordance with the flow (process sequence) of the process and the work. Moreover, the worker W selects the report contents icon for each category to describe (register) the image information in the report.

It is also considered that the check item of the check work performed by the worker W does not correspond to all the categories obtained from the report creating server 3 by the report creating device 2 in Step S230 shown in FIG. 8. In this case, when the report creating device 2 repeats the report creating process, it is not necessary to display the selection screen of the report contents icons corresponding to all the categories obtained in Step S230 shown in FIG. 8 as a selection screen of the report contents icon categorized into each category displayed on the display 22 in Step S241.

Thereafter, in Step S271, the report creating device 2 transmits the created report to the report creating server 3 in accordance with the instructions of submitting the created report from the worker W in Step S270 shown in FIG. 8.

By the flow (process sequence) of the process and the work, also in the second report creating method, the report creating system 1 can support the work of creating the report in which the report contents about the trouble discovered by the worker W, who performs the check work in each facility while carrying the report creating device 2 and moving one by one in the plan, is described (registered).

The operation and the display screen at a time of the report creating device 2 performing the report creating process are not limited to the operation and the display screen shown in the first report creating method and the second report creating method, which have been described above.

There is a possibility that unexpected troubles discovered by the worker W in the facility of check target, such as an abnormality and a failure of the facility, do not correspond to the report contents which has been uniquely determined to each of the report contents icons. In other words, it is also considered that a trouble which is not shown by the report contents icon in the selection screen of the report contents icon displayed on the display 22 has occurred in the facility of check target. Also in this case, the worker W must submit a report about the discovered trouble.

### <Registration method of image information>

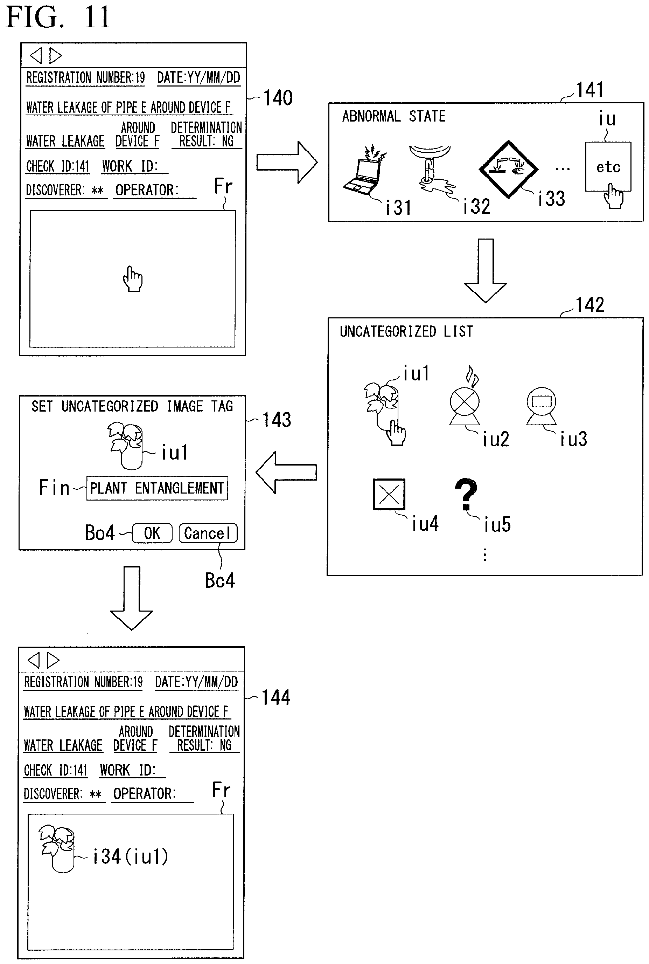

Next, an example of process and work at a time of newly registering (creating) the image information for reporting unexpected troubles discovered by the worker W in the facility of check target, such as an abnormality and a failure of the facility, in the plant where the report creating system 1 has been established, will be described. FIG. 11 is a drawing illustrating an operation of newly registering the image information at a time of creating the report in the plant where the report creating system 1 of the first embodiment has been established. FIG. 11 shows an example of an operation performed by the worker W to the report creating device 2 in order to newly register (create) uncategorized image information representing the report contents corresponding to the discovered trouble, and a report displayed on the report creating device 2, when the image information representing the report contents corresponding to the discovered trouble is not displayed (shown) on the display 22.

In the report creating process when the worker W who discovered the trouble creates the report (Step S240 to Step S261 shown in FIG. 8), a new registration (creation) of the uncategorized image information is performed by the worker W. A case in which the report creating device 2 registers (creates) the uncategorized image information newly at a time of the report creating process of inputting the report contents (describing (registering) the image information in the report) in accordance with an operation of the worker W by the second report creating method will be described below, with reference to FIG. 8 and FIG. 11. Specifically, as shown in FIG. 11, a case in which the worker W newly registers (creates) the image information, of which meaning corresponding to the report contents is uniquely determined, in order to input the report contents when the report format corresponding to the check work of which check ID = 141 ("there is no water leakage of pipe E") is displayed on the display 22 of the report creating device 2 will be described. Hereinafter, an icon of which category of the report contents is not categorized (in other words, an uncategorized icon) is also included in the data of the image information which has been already stored in the data storage 32. In Step S230 shown in FIG. 8, the report creating device 2 obtains the image information including the uncategorized icon from the report creating server 3, and the report creating device 2 stores the obtained image information in the unillustrated built-in memory.

First, in Step S240, similar to the operation in the second report creating method shown in the display screen 130 of FIG. 10, the worker W selects (for example, taps) an arbitrary position in the report contents input area Fr in the report shown in the display screen 140 of FIG. 11 displayed on the display 22 of the report creating device 2. Similar to the operation in the second report creating method, the user interface 23 in the report creating device 2 detects the touch operation to the report contents input area Fr, and receives the selection operation of the report contents input area Fr. Moreover, the user interface 23 outputs, to the report creator 24, information representing that the report contents input area Fr has been selected as instructions of the report creating process. In the report creator 24, similar to the operation in the second report creating method, the image information processor 243 requests, to the image information obtainer 242, the data of the image information corresponding to the report contents input area Fr selected by the worker W (in other words, the report contents icon including the uncategorized icon) based on the instructions of the report creating process output from the user interface 23. Similar to the operation in the second report creating method, the image information obtainer 242 outputs, to the image information processor 243, the requested report contents icon among the data of the image information stored in the unillustrated built-in memory. Similar to the operation in the second report creating method, the image information processor 243 outputs, to the report information processor 241, each of the data of the report contents icon obtained from the image information obtainer 242 and the information representing that the instructions of the report creating process have been performed.

Similar to the operation in the second report creating method, in Step S241, the report information processor 241 outputs, to the display 22, each report contents icon categorized into one category among the data of the report contents icon output from the image information processor 243, and the display 22 displays each report contents icon. At this time, the report information processor 241 also outputs, to the display 22, an uncategorized icon iu representing that there is a category of an uncategorized icon, and the display 22 displays the uncategorized icon iu as a report contents icon. Thereby, the selection screen 141 including the uncategorized icon iu in each report contents icon categorized into one category is displayed on the display 22. In the selection screen 141, the abnormal sound icon i31, the water leakage icon i32, the corrosion icon i33, and the uncategorized icon iu, which have been categorized into the "abnormal state" category, are displayed as a report contents icon of selection target.

Similar to the operation in the second report creating method, the selection screen 141 of the report contents icon including the uncategorized icon iu may be displayed on the display 22 instead of the display screen 140 of the report format which has been already displayed on the display 22. Moreover, the selection screen 141 may be displayed as a pop-up screen on the display screen 140 of the report format.

It is also considered that many report contents icons categorized into one category are to be displayed on the display 22 in Step S241, and the selection screen 141 in which all the report contents icons including the uncategorized icon iu have been shown cannot be within the size which can be displayed on the display 22. In this case, similar to the operation in the second report creating method, the report information processor 241 displays, on the display 22, a part of the selection screen 141 of the report contents icons including the uncategorized icon iu. Moreover, the report information processor 241 moves the selection screen 141 of the report contents icons including the uncategorized icon iu displayed on the display 22 in accordance with a flick operation or a scroll operation of the selection screen 141 by the worker W.

Thereafter, when the selection screen 141 of the report contents icons including the uncategorized icon iu is displayed on the display 22 of the report creating device 2, the worker W selects (for example, taps) the uncategorized icon iu in Step S250. The user interface 23 detects the touch operation to the uncategorized icon iu, and receives the selection operation of the uncategorized icon iu. Moreover, the user interface 23 outputs, to the report creator 24, information representing that the uncategorized icon iu has been selected as instructions of the report creating process. In the report creator 24, the image information processor 243 outputs, to the display 22, a list of uncategorized icons of which category of the report contents is not categorized, in accordance with the information representing that the uncategorized icon iu output from the user interface 23 has been selected. The display 22 displays the list of the uncategorized icons output from the report creator 24. Thereby, the display screen 142 of "uncategorized list" including at least one or more uncategorized icons is displayed on the display 22. The display screen 142 of "uncategorized list" is a selection screen for selecting one of uncategorized icons iu.

The display screen 142 is an example of the selection screen of "uncategorized list" in which an uncategorized icon iu1 to an uncategorized icon iu5 are shown. The uncategorized icon iu1 is an uncategorized icon iu created beforehand in consideration that plants such as ivy gets entangled with the facility of check target, such as a pump, a valve, a container, and a pipe. The uncategorized icon iu2 is an uncategorized icon iu created beforehand in consideration that steam is generated from the facility of check target, such as a pump. The uncategorized icon iu3 is an uncategorized icon iu created beforehand in consideration that displayed information cannot be checked because of dirt on the display in the facility of check target, such as a pump. The uncategorized icon iu4 is an uncategorized icon iu created beforehand in consideration that a trouble of which phenomenon and situation cannot be specified is discovered. The uncategorized icon iu5 is an uncategorized icon iu5 created beforehand in consideration that there is no applicable icon.

Here, the selection screen 142 of "uncategorized list" may be displayed on the display 22 instead of the selection screen 141 of the report contents icons including the uncategorized icon iu which has been already displayed on the display 22. The selection screen 142 of "uncategorized list" may be displayed on the display 22 as a pop-up screen on the selection screen 141 of the report contents icons including the uncategorized icon iu which has been already displayed on the display 22.

It is also considered that many uncategorized icons iu included in "uncategorized list" are to be displayed on the display 22 in Step S241, and the selection screen 142 of "uncategorized list" in which all the uncategorized icons iu have been displayed cannot be displayed on the display 22 (in other words, the selection screen 142 cannot be within the size which can be displayed on the display 22). In this case, similar to the operation in the second report creating method, the report information processor 241 displays, on the display 22, a part of the selection screen 142 of "uncategorized list". Moreover, the report information processor 241 moves the selection screen 142 of "uncategorized list" displayed on the display 22 in accordance with a flick operation or a scroll operation of the selection screen 142 by the worker W.

Thereafter, when the selection screen 142 of "uncategorized list" is displayed on the display 22 of the report creating device 2, the worker W selects (for example, taps) one of the uncategorized icons iu probably representing the report contents in Step S250. The user interface 23 detects a touch operation to the selected uncategorized icon iu (here, the uncategorized icon iu1), and receives a selection operation of the uncategorized icon iu. Moreover, the user interface 23 outputs, to the report creator 24, information representing the selected uncategorized icon iu as instructions of the report creating process. In the report creator 24, the image information processor 243 outputs, to the display 22, a registration screen for registering unique report contents into the selected uncategorized icon iu in accordance with the information representing the uncategorized icon iu (here, the uncategorized icon iu1), which has been output from the user interface 23. The display 22 displays the registration screen output from the report creator 24. Thereby, the display screen 143 of "uncategorized icon registration" for inputting the information of the unique report contents represented by the selected uncategorized icon iu is displayed on the display 22. The display screen 143 of "uncategorized icon registration" is an input screen for inputting the information of the unique report contents represented by the selected uncategorized icon iu.

In the selection screen 142 of "uncategorized list", the method of deciding the selection of the uncategorized icon iu by the worker W is not limited to the method of selecting (for example, tapping) one of the uncategorized icons iu. For example, in the selection screen 142 of "uncategorized list", the OK button and the cancel button may be arranged in an area in which the uncategorized icons iu are not displayed. Moreover, when the OK button is selected (for example, tapped), the selection of the uncategorized icon iu may be decided. Furthermore, when the cancel button is selected (for example, tapped), the selection of the uncategorized icon iu may be canceled.

The input screen 143 of "uncategorized icon registration" may be displayed on the display 22 instead of the selection screen 142 of "uncategorized list" which has been already displayed on the display 22. Moreover, the input screen 143 of "uncategorized icon registration" may be displayed on the display 22 as a pop-up screen on the selection screen 142 of "uncategorized list" which has been already displayed on the display 22.

Thereafter, in Step S250, when the input screen 143 of "uncategorized icon registration" is displayed on the display 22, the worker W operates the report creating device 2 to input the information of the unique report contents corresponding to the selected uncategorized icon iu, and the information of the input report contents is decided. Specifically, the worker W inputs the information of the report contents represented by the selected uncategorized icon iu in the information input area Fin in the input screen 143 of "uncategorized icon registration" of the selected uncategorized icon iu, by using an character input function of the report creating device 2. In the input screen 143, as the information of the unique report contents represented by the selected uncategorized icon iu1, "plant entanglement" is input. In other words, the input screen 143 shows an example of registering the selected uncategorized icon iu1 as an icon representing "plant entanglement". After the input of the information of the report contents corresponding to the selected uncategorized icon iu is completed, the worker W selects (for example, taps) the OK button Bo4 in the input screen of "uncategorized icon registration". Thereby, the information of the report contents represented by the input uncategorized icon iu is decided. The user interface 23 detects the touch operation to the OK button Bo4, and receives a selection operation of the OK button Bo4. Moreover, the user interface 23 outputs, to the report creator 24, information representing that the OK button Bo4 has been selected and information of the report contents input with respect to the uncategorized icon iu as instructions of the report creating process. Thereby, new registration (creation) of the uncategorized image information (here, the uncategorized icon iu1) by the worker W is completed.

The cancel button Bc4 shown in the input screen 143 is a button for instructing to cancel the input of the information of the report contents with respect to the selected uncategorized icon iu. If the worker W selects (for example, taps) the cancel button Bc4, the user interface 23 receives the selection operation of the cancel button Bc4. Moreover, the user interface 23 outputs, to the report creator 24, information representing that the cancel button Bc4 has been selected as instructions of the report creating process. In this case, the report information processor 241 displays, on the display 22, the display screen 140 of the report format, the selection screen 141 of the report contents icons including the uncategorized icon iu, or the selection screen 142 of "uncategorized list".

Thereafter, in the report creator 24, in Step S260, the report information processor 241 performs the information updating process of adding, in the report contents input area Fr, the uncategorized icon iu (here, the uncategorized icon iu1) of which new registration (creation) has been completed, based on the instructions of the report creating process output from the user interface 23. Thereby, the uncategorized icon iu which has been newly registered (created) into the report contents input area Fr in the report by the worker W is described (registered). For example, the report information processor 241 stores, in the unillustrated built-in memory, the report to which the information updating process has been performed (in other words, data of the updated (created) report). The report information processor 241 adds, in the data of the image information stored in the unillustrated built-in memory by the image information obtainer 242, the information of the report contents uniquely determined to the uncategorized icon iu of which new registration (creation) has been completed, in Step S230 shown in FIG. 8. At this time, the report information processor 241 adds, in the data of the image information stored in the unillustrated built-in memory, the uncategorized icon iu1 of which new registration (creation) has been completed as a plant entanglement icon i34 newly categorized into the "abnormal state" category. This is because the uncategorized icon iu1 which is added at this time by the report information processor 241 is the uncategorized icon iu which has been added by the operation at a time of selecting the report contents icon categorized into the "abnormal state" category.

The report information processor 241 outputs, to the display 22, the data of the updated (created) report in Step S261. The display 22 displays the report output from the report information processor 241 in order to show the report to the worker W. Thereby, the display 22 generates the display screen 144 in accordance with the data of the updated (created) report output from the report information processor 241, and the display 22 displays the display screen 144. The display screen 144 shows the report in which the plant entanglement icon i34 newly added (in other words, newly registered (created) by the worker W) as a report contents icon categorized into "abnormal state" category is described (registered) in the report content input region Fr in the report as a part of the report content.

In the input screen 143 of "uncategorized icon registration", the method of deciding the information of the report contents input by the worker W is not limited to the OK button Bo4 shown in the input screen 143. For example, if an area other than the area where the information of the report contents is input is selected (for example, tapped) in the input screen 143 of "uncategorized icon registration, the information of the input report contents may be decided. In this case, if the area other than the area where the information of the report contents is input is selected (for example, tapped) without inputting the information of the report contents in the input screen 143 of "uncategorized icon registration", it represents that the input of the information of the report contents with respect to the selected uncategorized icon iu is canceled.

By the flow (process sequence) of the process and the work, the report creating system 1 can support the work of associating the uniquely determined report contents with the uncategorized icon iu corresponding to the discovered trouble and registering (creating) it as the new image information, which is performed at a time of the report creating process by the worker W who performs the check work in each facility while carrying the report creating device 2 and moving one by one in the plant.

The operation and the display screen for newly registering (creating) the uncategorized icon iu by the report creating device 2 is not limited to the operation and the display screen shown in the registration method of the image information described above.

Thereafter, in Step S271, the report creating device 2 transmits the created report to the report creating server 3 in accordance with the instructions of submitting the created report from the worker W in Step S270 shown in FIG. 8. At this time, the report creating device 2 associates information representing that the uncategorized icon iu is newly registered (created) by the worker W with information of the unique report contents represented by the uncategorized icon iu, and the report creating device 2 transmits the associated information to the report creating server 3. Specifically, the report creating device 2 associates information representing the uncategorized icon iu selected by worker W, information of the report contents corresponding to the uncategorized icon iu input by the worker W, and information of the category to which the uncategorized icon iu belongs, with each other, and the report creating device 2 transmits the associated information to the report creating server 3.

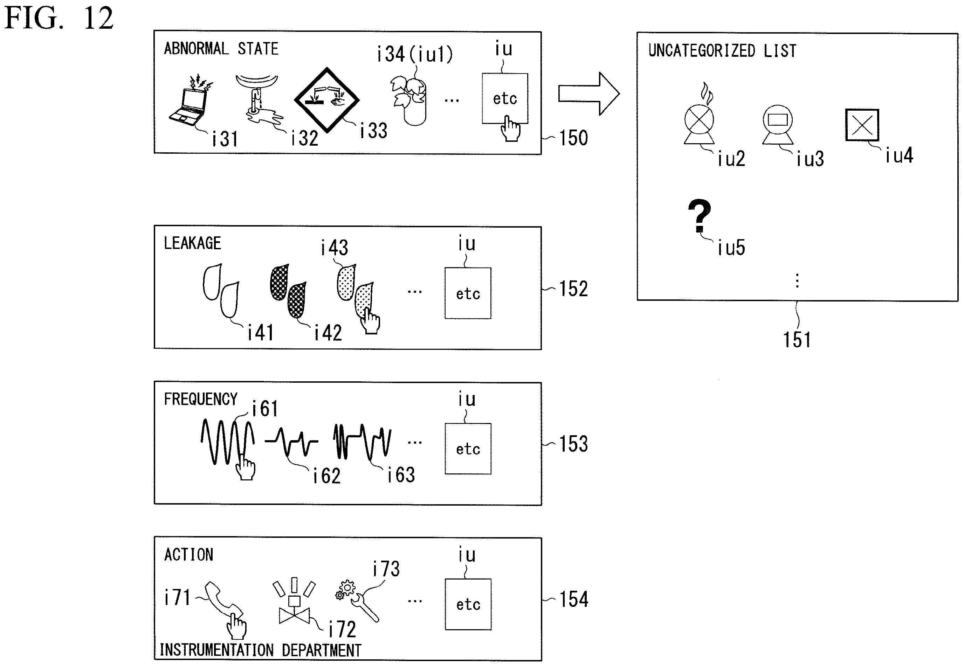

As described above, in the second report creating method, by repeating the report creating process, the worker W selects the report contents icon for each category and describes (registers) the image information in the report. For this reason, the added uncategorized icon iu is displayed in the selection screen of the report contents icon displayed on the display 22 as a report contents icon of selection target in a subsequent report creating process, similar to other report contents icons. FIG. 12 is a drawing illustrating a state in which the newly registered image information is added in the plant where the report creating system 1 of the first embodiment has been established. FIG. 12 shows an example of a selection screen of the report contents icons including the newly registered (created) image information displayed on the report creating device 2.

The added uncategorized icon iu has been included as a report contents icon of selection target in the selection screen 150 of the report contents icon after adding the uncategorized icon iu. The abnormal noise icon i31, the water leakage icon i32, the corrosion icon i33, the plant entanglement icon i34, and the uncategorized icon iu, which are categorized into the "abnormal state" category, are displayed in the selection screen 150 of the report contents icon as report content icons of selection target. If the worker W selects (for example, taps) the uncategorized icon iu in Step S250 when the selection screen 150 of the report contents icon is displayed on the display 22 of the report creating device 2, the selection screen 151 of "uncategorized list" is displayed on the display 22. In the selection screen 151 of "uncategorized list" after the uncategorized icon iu1 has been registered as the plant entanglement icon i34, the uncategorized icon iu2 to the uncategorized icon iu5 other than the uncategorized icon iu1 are displayed as an uncategorized icon iu of selection target. In other words, the uncategorized icon iu1 registered as the plant entanglement icon i34 is deleted from the selection screen 142 of "uncategorized list" shown in FIG. 11.

The uncategorized icon iu is also displayed in the selection screens 152 to 154 of the report contents icon categorized into each category as a report contents icon of selection target. However, even if the worker W selects (for example, taps) the uncategorized icon iu in the selection screens 152 to 154 of the report contents icon, the selection screen 151 of "uncategorized list" is displayed on the display 22.

Thereby, the report creating system 1 can prevent that different report contents are registered into the same report contents icon. For this reason, in the report creating system 1, it can be prevented that different report contents are registered into the same report contents icon, and also prevented that the report contents reported by the report, such as a phenomenon of abnormality and a situation of failure, cannot be described (registered) correctly. That is, even if the report creating system 1 creates the report easily by using the uncategorized image information, the report creating system 1 can report correctly the phenomenon of the abnormality and the situation of the failure discovered by the worker W.

Also in the report creating server 3, if the information of the uncategorized icon iu which has been registered (created) newly is transmitted from the report creating device 2 with the report, the uncategorized icon iu transmitted from the report creating device 2 and registered (created) newly is added to the data of the image information stored (memorized) in the data storage 32. At this time, the manager M can also edit the information of the report contents input by the operator W in order to associate more detailed information with the uncategorized icon iu registered (added) newly. The uncategorized icon iu registered (added) newly is used by two or more report creating devices 2 in the report creating system 1. That is, two or more workers W who belong to the plant can share the data of the same image information. At this time, in order to represent that the data is data of the image information shared newly, for example, a mark of a character "New" may be superimposed on the uncategorized icon iu registered (added) newly during a predetermined period.

As described above, in the report creating system 1 of the first embodiment, the report creating device 2 describes (registers) the image information obtained from the report creating server 3 in the format of the check list and the report which have been obtained from the report creating server 3, in order to show the check result and the information of the report contents visually. In the report creating system 1 of the first embodiment, the contents (meanings) represented by the image information described (registered) in the format of the check list or the report are uniquely determined based on an assumed check result of the facility and an assumed trouble of the facility. For this reason, in the report creating system 1 of the first embodiment, the worker W who carries the report creating device 2, patrols in the plant, and performs the check work in each facility can describe the check result in the check list, and can describe the report contents about a trouble, such as a phenomenon of an unexpected abnormality of the facility and a situation of an unexpected failure of the facility more correctly and easily than the conventional technology of describing with a text. For this reason, in the report creating system 1 of the first embodiment, the manager M can understand a normality of the facility correctly based on the check result and the report contents which have been submitted by the worker W, and the manager M can consider an appropriate action to the facility. Thereby, in the plant where the report creating system 1 of the first embodiment has been established, the appropriate action can be performed to the trouble discovered by the worker W.

In the description of the report creating system 1 of the first embodiment, an example of the format of the check list and the report has been shown in FIG. 2. However, contents of the format of the check list and the report are not limited to the contents shown in FIG. 2.

In the description of the report creating system 1 of the first embodiment, examples of various icons categorized into various categories have been shown in FIG. 5 and FIG. 11. However, these icons are examples, and the shapes of the items are not limited to the examples shown in FIG. 5 or FIG. 11. For example, these icons may be so-called moving icons. The meaning uniquely determined to each icon is not limited to each meaning described in the report creating system 1 of the first embodiment.

In the description of the report creating system 1 of the first embodiment, a case in which the worker W discovers a trouble such as an unexpected abnormality and an unexpected failure of the facility while the worker W performs the check work in the facility of check target, and the worker W describes (registers) the image information in the report in which a phenomenon of the abnormality and a situation of the failure which have been discovered are described, has been described. However, the report is not necessarily created during the check work. For example, it is considered that one worker W performs the check work and describes (registers) the image information of the check result (an icon belonging to the "determination result" category) in the check list, and thereafter, another worker W goes to the facility where the NG icon i12 representing that the check result is "NG = no good" is described (registered) in the check list, and performs a detailed check work to create the report. Also in this case, the image information is described (registered) in the report in order to report the situation of the facility more correctly and easily than the conventional technology of describing with a text.

In the report creating system 1 of the first embodiment, the report creating device 2 obtains the check list, the report format, and the data of the image information from the report creating server 3, and the report creating device 2 generates the display screen and displays it on the display 22. However, for example, the report creating server 3 may generate each display screen shown in the description of each operation of the report creating system 1 of the first embodiment, and the report creating server 3 may transmit the each display screen to the report creating device 2. Moreover, the report creating device 2 may display the each display screen received from the report creating server 3.

### <Second Embodiment>

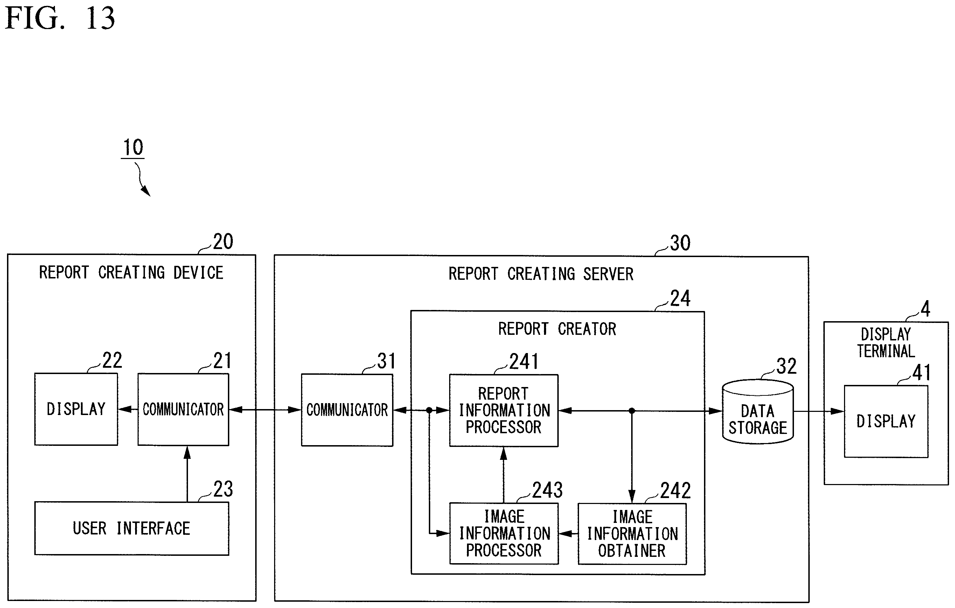

Next, a second embodiment of the present invention will be described with reference to drawings. FIG. 13 is a block diagram illustrating each component included in a report creating system 10 of the second embodiment. The report creating system 10 is equipped with at least one of report creating devices 20 and a report creating server 30. Similar to the report creating system 1 of the first embodiment, the report creating system 10 is also a supporting system which supports a work of creating the report by the worker W who goes to each facility installed in the plant, performs the check work, and coping with a trouble. The report creating system 10 is also a supporting system which supports a check work of the report submitted from the worker W by the manager M who understands a normality of each facility installed in the plant. Therefore, also in the report creating system 10, similar to the report creating system 1 of the first embodiment, the report creating device 20 shows the worker W the format of the check list or the report, and the worker W describes the report contents about the check result or the trouble by using the image information.

Also in the report creating system 10, similar to the report creating system 1 of the first embodiment, the report creating device 20 and the report creating server 30 are connected to each other through a wireless communication network established in the plant. Similar to the report creating system 1 of the first embodiment, FIG. 13 shows an example of configuration of the report creating system 10 including a display terminal 4 as a component for the manager M to check the report. Similar to the report creating system 1 of the first embodiment, the report creating system 10 is equipped with two or more report creating device 20 each of which is carried by each worker W. However, similar to the report creating system 1 of the first embodiment, in order to describe simply below, as shown in FIG. 13, the report creating system 10 is equipped with one report creating device 20, the report creating server 30, and the display terminal 4.

The report creating system 10 shown in FIG. 13 is equipped with the report creating device 20 instead of the report creating device 2 in the report creating system 1 of the first embodiment shown in FIG. 1 or FIG. 4. Moreover, the report creating system 10 shown in FIG. 13 is equipped with the report creating server 30 instead of the report creating server 3 in the report creating system 1 of the first embodiment shown in FIG. 1 or FIG. 4. In the report creating system 10 shown in FIG. 13, the display terminal 4 is the same as the display terminal 4 in the report creating system 1 of the first embodiment.

The report creating device 20 is equipped with a communicator 21, a display 22, and a user interface 23. The report creating server 30 is equipped with a communicator 31, a report creator 24, and a data storage 32. The display terminal 4 is equipped with a display 41. As shown in FIG. 13, in the report creating system 10, the report creator 24 is included in the report creating server 30 instead of the report creating device 2 in the report creating system 1 of the first embodiment. In other words, in the report creating system 10, the report creator 24 is moved from the report creating device 2 in the report creating system 1 of the first embodiment to the report creating server 30. For this reason, the function of each component included in the report creating device 20 and the report creating server 30 is the same as the function of each component included in the report creating device 2 and the report creating server 3 in the report creating system 1 of the first embodiment. Therefore, the same reference numeral is assigned to the component corresponding to the component in the report creating system 1 of the first embodiment below, and detailed explanation about the function of each component will be omitted. Moreover, only different operation because of the report creator 24 being moved from the report creating device 2 to the report creating server 30 will be described.

First, each component included in the report creating device 20 will be described. The user interface 23 receives an operation of the worker W to the report creating device 20, and the user interface 23 outputs to the communicator 21 the information representing the received operation of the worker W (in other words, information of various instructions to the report creating device 20 by the worker W). The communicator 21 communicates with the communicator 31 in the report creating server 30 through the wireless communication network established in the plant or the Internet. The communicator 21 transmits, to the communicator 31, information of instructions by the worker W output from the user interface 23 (hereinafter, simply "instructions information"). The communicator 21 outputs, to the display 22, information for generating a display screen (hereinafter, simply "display screen information") which has been output from the report creator 24 in the report creating server 30 and transmitted from the communicator 31. The display 22 generates the display screen in accordance with the display screen information output from the communicator 21, and displays the display screen.

Next, each component included in the report creating server 30 will be described. The communicator 31 communicates with the communicator 21 in the report creating device 20 through the wireless communication network established in the plant or the Internet. The communicator 31 outputs, to the report creator 24, the instructions information which has been output from the user interface 23 in the report creating device 20 and transmitted from the communicator 21. The communicator 31 transmits, to the communicator 21, the display screen information output from the report creator 24.

Since the report creator 24 is moved to the report creating server 30, instructions and an input/output destination of data or information differ. However, similar to the report creator 24 in the report creating device 2 included in the report creating system 1 of the first embodiment, the report creator 24 performs the information updating process. Specifically, the report creator 24 updates the data of the check list and the report in accordance with the instructions information output from the communicator 31, and the worker W operates the report creating device 20 in order to describe (register) information of the input check result in the check list and the report, and reflects it. The report creator 24 stores, in the data storage 32, the data of the check list and the report, which has been updated. The report creator 24 generates a display screen information for displaying the data of the check list and the report on the display 22 in the report creating device 20, and the report creator 24 outputs the generated display screen information to the communicator 31. Also in each of the report information processor 241, the image information obtainer 242, and the image information processor 243, which are included in the report creator 24, instructions and an input/output destination of data or information differ. However, the report information processor 241, the image information obtainer 242, and the image information processor 243 perform the same process as the report creating system 1 of the first embodiment.

Specifically, the report information processor 241 reads, out of the data storage 32, the data of the check list and the report in accordance with the instructions information output from the communicator 31, and the report information processor 241 generates a display screen information corresponding to the data of the check list and the report, which has been read, and outputs the generated display screen information to the communicator 31. Moreover, the report information processor 241 performs the information updating process of adding, in the data of the check list and the report, the information output from the image information processor 243 and reflecting it. The report information processor 241 stores, in the data storage 32, the data of the check list and the report, to which the information updating process has been performed. The report information processor 241 generates the display screen information corresponding to the data of the check list and the report, to which the information updating process has been performed, and the report information processor 241 outputs the generated display screen information to the communicator 31. Thereby, the report creating device 20 generates the display screen in accordance with the display screen information transmitted through the communicator 31 and the communicator 21, and the report creating device 20 shows the worker W the check list and the report which have been updated.

The image information obtainer 242 obtains the data of the image information from the data storage 32 in accordance with the instructions information output from the communicator 31, and the image information obtainer 242 outputs the obtained image information to the image information processor 243.

The image information processor 243 outputs, to the report information processor 241, the corresponding image information output from the image information obtainer 242 in accordance with instructions of the information updating process by the worker W, which have been included in the instructions information output from the communicator 31. At this time, the image information processor 243 also outputs, to the report information processor 241, the information representing a position in which the image information is to be described (registered), which has been specified by the instructions of the information updating process. Thereby, the report information processor 241 performs the information updating process of adding, in the position specified by the worker W in the check list or the report, the image information output from the image information processor 243, and reflecting it.

By the configuration, similar to the report creating system 1 of the first embodiment, the report creating system 10 supports the worker W, who carries the report creating device 20 and checks each facility installed in the plant, while the report creating device 20 and the report creating server 30 communicate with each other through the wireless communication network established in the plant or the Internet.

The operation of the report creating system 10 is the same as the operation of the report creating system 1 of the first embodiment. Specifically, in the report creating system 10, obtaining the check list, the report format, and the data of image information, and generating the display screen information, which are performed in the report creating device 2 of the report creating system 1 of the first embodiment, are performed in the report creating server 30. Thereby, the same operation as the first embodiment can be implemented. In other words, similar to the report creating system 1 of the first embodiment, the report creating system 10 can describe, in the check list, the check result by using the image information explained in FIG. 6 and FIG. 7, can describe, in the report, the report contents by using the image information by the first report creating method or the second report creating method explained in FIG. 8 to FIG. 10, and can newly register the uncategorized image information by the method of registering the image information explained in FIG. 11 and FIG. 12. Therefore, detailed explanation about the operation of the report creating system 10 will be omitted.

As described above, similar to the report creating system 1 of the first embodiment, the report creating system 10 of the second embodiment describes (registers) the image information in the format of the check list or the report to show visually the information of the check result and the report contents. Similar to the report creating system 1 of the first embodiment, the report creating system 10 of the second embodiment supports describing the check result in the check list and describing the report contents about a trouble, such as a phenomenon of an unexpected abnormality and a situation of an unexpected failure of the facility, performed by the worker W who carries the report creating device 20, patrols in the plant, and performs the check work in each facility. Thereby, in the plant where the report writer system 10 of the second embodiment has been established, the worker W can describe correctly and easily in the check list and the report, and the managers M can understand a normality of the facility correctly, and can consider an appropriate action. For this reason, since the appropriate action can be performed to the trouble in the plant, the report creating system 10 of the second embodiment can achieve the same effect as the report creating system 1 of the first embodiment.

Furthermore, in the report creating system 1 of the first embodiment, it is assumed that the report creating device 2 is equipped with the unillustrated built-in memory of which storage capacity is large in order to temporarily store the data transmitted from the report creating server 3. On the other hand, in the report creating system 10 of the second embodiment, the report creator 24 is disposed in (moved to) the report creating server 30 so that the storage capacity of the unillustrated built-in memory in the report creating device 20 can be small.

As described above, according to the embodiments of the present invention, at a time of reporting the result of the check work or reporting the trouble, such as an abnormality and a failure of the facility which have been discovered unexpectedly, the worker, who patrols in the plant where the report creating system has been established and performs the check work in each facility, selects the image information which has been uniquely determined so that the meaning of the report contents displayed on report creating device can be understood visually. Thereby, in the embodiments of the present invention, also in a field of a facility of which check work has been performed and a facility of which trouble has been discovered, the report contents about the check result or the trouble can be described (registered) in the check list or the report correctly and easily. Moreover, in the embodiments of the present invention, since only selecting the image information is needed, the worker can describe (register), in the check list or the report, the report contents about the check result or the trouble in shorter time than a case of describing with a text. In the embodiments of the present invention, the meaning is uniquely determined to the image information which is to be described (registered) in the check list or the report by the worker. For this reason, the manager who manages each facility in the plant where the report creating system has been established checks the image information described (registered) in the check list or the report. Thereby, the manager can understand a normality of the facility correctly without asking the worker. For this reason, in the embodiments of the present invention, the manager can consider an appropriate action with respect to the reported facility, and can operate normally each facility in the plant where the report creating system has been established.

In the embodiments of the present invention, a case in which the report is created in the check work has been described. However, the invention idea in the report creating system of the present invention is not limited to creation of the report in the field of the check work. For example, the invention idea in the report creating system of the present invention can be applied as a solution for a state where it is difficult to understand the report contents correctly because of difference of an expression method, such as a text.

For example, one or more programs for implementing the process performed by the report creator 24 and each component in the report creator 24 shown in FIG. 1 or FIG. 13 may be stored in a non-transitory computer readable storage medium, and the one or more programs stored in the non-transitory computer readable storage medium may be read and executed by a computer system to perform the above-described various kinds of processes of the report creating system of the embodiments. The "computer system" may include hardware, such as an OS and a peripheral device. If the "computer system" uses the WWW system, the "computer system" also includes a homepage providing environment (or a displaying environment). The "non-transitory computer readable storage medium" is a storage device, such as a flexible disk, a magneto-optical disk, a ROM, a writable nonvolatile memory such as a flash memory, a portable medium such as a CD-ROM, and a hard disk drive built in the computer system.

Furthermore, similar to a volatile memory (for example, DRAM (Dynamic Random Access Memory)) in the computer system used as a server or a client when the program is transmitted through a network such as the Internet or a communication line such as a telephone line, the "non-transitory computer readable storage medium" includes a memory holding the program for a predetermined period. The program may be transmitted from the computer system storing the program in a storage device to another computer system, through a transmission medium or by a transmission wave in the transmission medium. Here, the "transmission medium" which transmits the program is a medium which has a function of transmitting information, similar to a network (communication network) such as the Internet, and a communication line such as a telephone line. The program may be for implementing a part of the function described above. Furthermore, the function described above may be implemented in combination with a program which has already stored in the computer system, or may be a so-called patch file (differential program).

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A report creating system comprising:
a report creating server comprising a data storage which stores a report format and image information, the report format being for describing report contents about a facility installed in a plant, the image information being determined uniquely to meaning of the report contents;
at least one report creating device which is carriable by a worker; and
a report creator configured to create a report in which the image information has been registered in the report format, the report creator being disposed in the report creating server or the report creating device,
wherein the report creator is configured to:
display, on the report creating device, the report format and the image information;
create the report in which the image information selected in accordance with an operation performed by the worker to the report creating device has been registered in the report format; and
display, on the report creating device, the report format in which the selected image information has been registered.

2. The report creating system according to claim 1,
wherein the report creator comprises:
an image information obtainer configured to obtain the image information from the data storage;
an image information processor configured to select image information, among the image information obtained by the image information obtainer, in accordance with an operation performed by the worker to the report creating device; and
a report information processor configured to:
display, on the report creating device, the report format and the image information before selected, which have been obtained from the data storage,
create the report in which the image information selected by the image information processor has been registered in the report format, and
display, on the report creating device, the report format in which the selected image information has been registered.

3. The report creating system according to claim 2,
wherein the image information is information with which detailed information represented by the report contents is associated, and
wherein the data storage stores a plurality of the image information categorized for each type of the report contents.

4. The report creating system according to claim 3,
wherein the data storage stores the image information which has been sorted in accordance with a predetermined condition.

5. The report creating system according to claim 4,
wherein the predetermined condition is a descending order of number of times of being selected.

6. The report creating system according to claim 4 or 5,
wherein the predetermined condition is a descending order of an importance or a priority of the report contents represented by the image information, or an occurrence frequency of a trouble which occurs in the facility.

7. The report creating system according to any one of claims 2 to 6,
wherein the image information comprises uncategorized image information which is not categorized into any type of the report contents, and
wherein the report information processor configured to:
display, on the report creating device, the uncategorized image information;
update meaning of the report contents represented by the uncategorized image information which has been selected, to meaning of the report contents uniquely determined and input in accordance with an operation performed by the worker to the report creating device; and
store, in the data storage, the uncategorized image information of which meaning of the report contents has been updated as the image information.

8. The report creating system according to any one of claims 2 to 7,
wherein the image information comprises icons each of which shows the report contents visually, and
wherein the report information processor is configured to:
display, on the report creating device, an icon before selected, for each type of the report contents into which the icon has been categorized,
create the report in which a selected icon has been registered in the report format, and
display, on the report creating device, the report format in which the selected icon has been registered.

9. The report creating system according to claim 8,
wherein the report creating device comprises a display configured to display a selection screen for selecting an icon for each type of the report contents.

10. A report creating device which is carriable by a worker, comprising:
a report creator configured to:
display, on a display, a report format and image information obtained from a data storage in a report creating server, the report format being for describing report contents about a facility installed in a plant, the image information being determined uniquely to meaning of the report contents;
create a report in which the image information selected in accordance with an operation performed by the worker to the report creating device has been registered in the report format; and
display, on the display, the report format in which the image information selected in accordance with the operation performed by the worker to the report creating device has been registered.

11. The report creating device according to claim 10,
wherein the report creator comprises:
an image information obtainer configured to obtain the image information from the data storage;
an image information processor configured to select image information, among the image information obtained by the image information obtainer, in accordance with the operation performed by the worker to the report creating device; and
a report information processor configured to:
display, on the display, the report format obtained from the data storage and the image information before selected,
create the report in which the image information selected by the image information processor has been registered in the report format, and
display, on the display, the report format in which the selected image information has been registered.

12. A report creating server comprising:
a data storage which stores a report format and image information, the report format being for describing report contents about a facility installed in a plant, the image information being determined uniquely to meaning of the report contents; and
a report creator configured to create a report in which the image information has been registered in the report format,
wherein the report creator is configured to:
display, on a report creating device, the report format and the image information, the report creating device being carriable by a worker;
create the report in which the image information selected in accordance with an operation performed by the worker to the report creating device has been registered in the report format; and
display, on the report creating device, the report format in which the selected image information has been registered.

13. The report creating server according to claim 12,
wherein the report creator comprises:
an image information obtainer configured to obtain the image information from the data storage;
an image information processor configured to select image information, among the image information obtained by the image information obtainer, in accordance with an operation performed by the worker to the report creating device; and
a report information processor configured to:
display, on a display in the report creating device, the report format obtained from the data storage and the image information before selected,
create the report in which the image information selected by the image information processor has been registered in the report format, and
display, on the display, the report format in which the selected image information has been registered.

14. A report creating method comprising:
displaying a report format and image information obtained from a data storage, the report format being for describing report contents about a facility installed in a plant, the image information being determined uniquely to meaning of the report contents;
creating a report in which selected image information has been registered in the report format; and
displaying the report format in which the selected image information has been registered.

15. A non-transitory computer readable storage medium storing one or more programs configured for execution by a report creating device which is carriable by a worker, the one or more programs comprising instructions for:
displaying a report format and image information obtained from a data storage, the report format being for describing report contents about a facility installed in a plant, the image information being determined uniquely to meaning of the report contents;
creating a report in which the image information selected in accordance with an operation by the worker has been registered in the report format; and
displaying the report format in which the image information selected in accordance with the operation by the worker has been registered.
